(19) Europäisches Patentamt / European Patent Office / Office européen des brevets

(11) **EP 2 811 744 A1**

(12) **EUROPEAN PATENT APPLICATION**
published in accordance with Art. 153(4) EPC

(43) Date of publication:
**10.12.2014 Bulletin 2014/50**

(51) Int Cl.:
*H04N 7/32* (0000.00)    *H04N 13/00* (2006.01)

(21) Application number: **13743601.0**

(22) Date of filing: **23.01.2013**

(86) International application number:
**PCT/JP2013/051263**

(87) International publication number:
**WO 2013/115023 (08.08.2013 Gazette 2013/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.01.2012   JP 2012018411**

(71) Applicant: **Sony Corporation**
**Tokyo 108-0075 (JP)**

(72) Inventors:
- **TAKAHASHI, Yoshitomo**
  **Tokyo 108-0075 (JP)**
- **NAKAGAMI, Ohji**
  **Tokyo 108-0075 (JP)**

(74) Representative: **Lewis, Darren John**
**D Young & Co LLP**
**120 Holborn**
**London EC1N 2DY (GB)**

(54) **IMAGE PROCESSING APPARATUS AND IMAGE PROCESSING METHOD**

(57)   The present technology relates to an image processing device and an image processing method that are capable of efficiently generating a multi-view image.

A setting unit of a non-base encoding unit sets view direction management information for managing a base image of a base view to be stored in a decoded picture buffer when encoding a dependent image of a dependent view. An encoding unit of the non-base encoding unit generates encoded data by encoding the base image and the dependent image. A delivery unit of the non-base encoding unit delivers the view direction management information that is set and the encoded data that is generated. The present technology can be applied to an image processing device that encodes a multi-view image, for example.

**FIG. 1**

EP 2 811 744 A1

**Description**

Technical Field

The present technology relates to an image processing device and an image processing method. In particular, the present technology relates to an image processing device and an image processing method that are capable of efficiently generating a multi-view image.

Background Art

With an object of further improving encoding efficiency in comparison to an AVC (Advanced Video Coding) method, progress has been made in standardization of an encoding method known as HEVC (High Efficiency Video Coding), and at the time of writing, RPS (Reference Picture Set) is proposed (NPLs 1 and 2). RPS functions to clearly indicate a state of a decoded picture buffer for each picture.

Citation List

Non-Patent Documents

NPL 1: Thomas Wiegand, Woo-jin Han, Benjamin Bross, Jens-Rainer Ohm, Gary J. Sullivian, "WD4: Working Draft 4 of High-Efficiency Video Coding", JCTVC-F_803_d5, Torino, IT 14-22 July, 2011
NPL2: "JCT-VC AHG report: Reference picture buffering and list construction (AHG21)", Joint Collaborative Team on Video Codeing (JCT-VC) of ITU-T SG16 WP3 and ISO/IEC JTC1/SC29/WG11, Geneva, CH, 21-30 November, 2011

Summary of Invention

Technical Problem

However, in RPS in the present state, multi-view images are not taken into account, and thus RPS cannot be applied to the generation of multi-view images.
In consideration of situations such as this, the present technology makes it possible to efficiently generate multi-view images.

Solution to Problem

An image processing device of a first aspect of the present technology includes a setting unit that sets view direction management information for managing a base image of a base view, which is stored in a decoded picture buffer when encoding a dependent image of a dependent view; an encoding unit that generates encoded data by encoding the base image and the dependent image; and a delivery unit that delivers the view direction management information that is set by the setting unit and the encoded data that is generated by the encoding unit.
An image processing method of a first aspect of the present technology, in which an image processing device includes a setting step of setting view direction management information for managing a base image of a base view, which is stored in a decoded picture buffer when encoding a dependent image of a dependent view; an encoding step of generating encoded data by encoding the base image and the dependent image; and a delivery step of delivering the view direction management information that is set in the setting step and the encoded data that is generated in the encoding step.
In the first aspect of the present technology, the view direction management information for managing the base image of the base view, which is stored in the decoded picture buffer when encoding the dependent image of the dependent view is set, the encoded data is generated by encoding the base image and the dependent image, and the view direction management information that is set and the encoded data that is generated are delivered.
An image processing device of a second aspect of the present technology includes a reception unit that receives view direction management information for managing a base image of a base view, which is stored in a decoded picture buffer when decoding a dependent image of a dependent view, and encoded data in which the base image and the dependent image are encoded; and a decoding unit that decodes the encoded data that is encoded and manages the base image of the decoded picture buffer based on the view direction management information.

An image processing method of a second aspect of the present technology, in which an image processing device includes a reception step of receiving view direction management information for managing a base image of a base view, which is stored in a decoded picture buffer when decoding a dependent image of a dependent view, and encoded data in which the base image and the dependent image are encoded; and a decoding step of decoding the encoded data that is encoded and managing the base image of the decoded picture buffer based on the view direction management information.

In the second aspect of the present technology, the view direction management information for managing the base image of the base view, which is stored in the decoded picture buffer when decoding the dependent image of the dependent view, and the encoded data in which the base image and the dependent image are encoded are received, the encoded data that is encoded is decoded, and the base image of the decoded picture buffer based on the view direction management information is managed.

Furthermore, the image processing devices of the first aspect and the second aspect can be realized by causing a computer to execute a program.

In addition, in order to realize the image processing devices of the first aspect and the second aspect, it is possible to provide the program to be executed by the computer by delivering the program via a delivery medium, or by recording the program on a recording medium. Advantageous Effects of Invention

According to the first aspect of the present technology, it is possible to generate encoded data in which a multi-view image is efficiently generated.

In addition, according to the second aspect of the present technology, it is possible to decode encoded data in which a multi-view image is efficiently generated.

Brief Description of Drawings

[Fig. 1] Fig. 1 is a block diagram showing a configuration example of an embodiment of an encoding device, which is an image processing device to which the present technology is applied.
[Fig. 2] Fig. 2 is a block diagram showing a configuration example of a non-base encoding unit.
[Fig. 3] Fig. 3 is a block diagram showing a configuration example of an encoding unit.
[Fig. 4] Fig. 4 is a diagram showing an example of syntax of a SPS.
[Fig. 5] Fig. 5 is a diagram showing an example of syntax of a slice header.
[Fig. 6] Fig. 6 is a diagram showing an example of syntax of a PPS.
[Fig. 7] Fig. 7 is a diagram showing an example of syntax of an RPS.
[Fig. 8] Fig. 8 is a diagram illustrating an example of encoding.
[Fig. 9] Fig. 9 is a diagram illustrating an allocation process of a reference index.
[Fig. 10] Fig. 10 is a flowchart illustrating an encoding process.
[Fig. 11] Fig. 11 is a flowchart illustrating an encoding process.
[Fig. 12] Fig. 12 is a flowchart illustrating an RPS information encoding process.
[Fig. 13] Fig. 13 is a flowchart illustrating an RPS information generation process.
[Fig. 14] Fig. 14 is a flowchart illustrating a setting process.
[Fig. 15] Fig. 15 is a block diagram showing a configuration example of an embodiment of a decoding device, which is an image processing device to which the present technology is applied.
[Fig. 16] Fig. 16 is a block diagram showing a configuration example of a non-base decoding unit.
[Fig. 17] Fig. 17 is a block diagram showing a configuration example of a decoding unit.
[Fig. 18] Fig. 18 is a flowchart illustrating a demultiplexing process.
[Fig. 19] Fig. 19 is a flowchart illustrating a decoding process.
[Fig. 20] Fig. 20 is a flowchart illustrating a management process.
[Fig. 21] Fig. 21 is a diagram showing another example of the syntax of the SPS.
[Fig. 22] Fig. 22 is a diagram showing a configuration example of one embodiment of a computer.
[Fig. 23] Fig. 23 is a diagram showing a schematic configuration example of a television device to which the present technology is applied.
[Fig. 24] Fig. 24 is a diagram showing a schematic configuration example of a mobile telephone to which the present technology is applied.
[Fig. 25] Fig. 25 is a diagram showing a schematic configuration example of a recording and reproduction device to which the present technology is applied.
[Fig. 26] Fig. 26 is a diagram showing a schematic configuration example of an imaging device to which the present technology is applied.

Description of Embodiments

Configuration Example of One Embodiment of Encoding Device

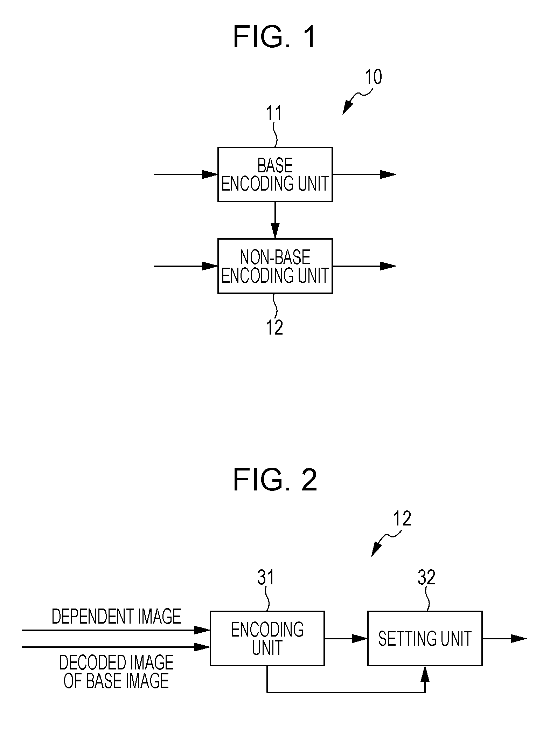

Fig. 1 is a block diagram showing a configuration example of an embodiment of an encoding device, which is an image processing device to which the present technology is applied.

An encoding device 10 of Fig. 1 is a device that encodes image data of a multi-view image, and is configured of a base encoding unit 11 and a non-base encoding unit 12.

The base encoding unit 11 encodes an image (hereinafter referred to as a base image) of a predetermined viewpoint (a base view) within the image data of the multi-view image using the HEVC method, and outputs the image. The base encoding unit 11 supplies the decoded image of the base image and the RPS (Reference Picture Set) information that are obtained when encoding to the non-base encoding unit 12.

The non-base encoding unit 12 encodes an image (hereinafter referred to as a dependent image) of a viewpoint (a dependent view) that is different from the base image viewpoint (the base view) within the image data of the multi-view image using a method that conforms to the HEVC method, and outputs the image.

The non-base encoding unit 12 receives the decoded image of the base image and the RPS information from the base encoding unit 11 and performs encoding using them. Hereinafter, description will be given of the encoding of the non-base encoding unit 12, in which the encoding is performed using a method that conforms to the HEVC method.

Configuration Example of Non-Base Encoding Unit 12

Fig. 2 is a block diagram showing a configuration example of the non-base encoding unit 12 of Fig. 1.

The non-base encoding unit 12 is configured of an encoding unit 31 and a setting unit 32.

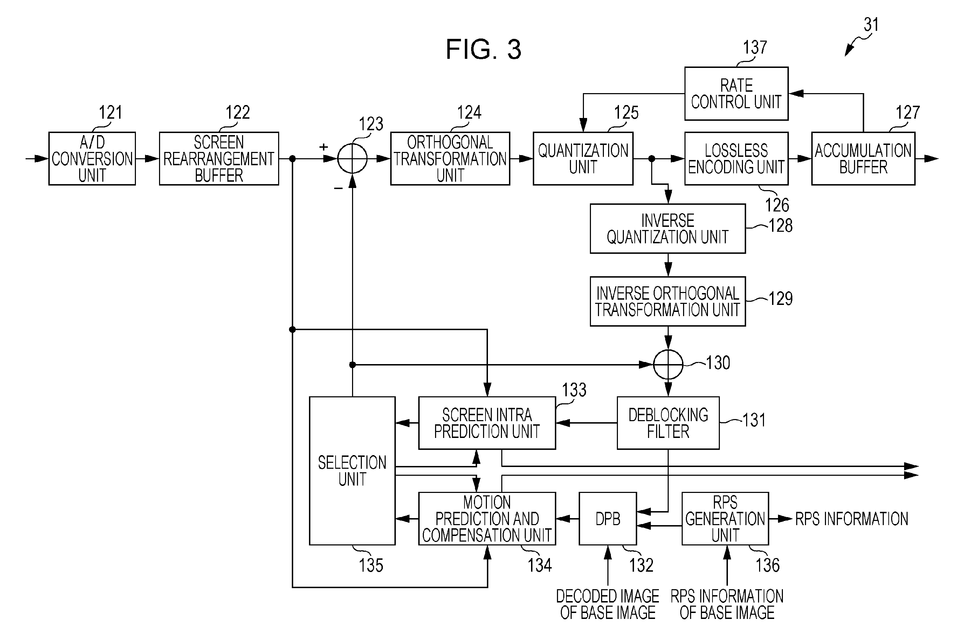

The encoding unit 31 performs encoding of slice units using a method that conforms to the HEVC method in relation to the dependent image that is input. The encoding unit 31 supplies the encoded data and the like of slice units that is obtained as a result of the encoding to the setting unit 32. In addition, when encoding the dependent image, the encoding unit 31 generates RPS information as the management information for managing the state of a DPB (a decoded picture buffer) 132 (Fig. 3) and supplies the RPS information to the setting unit 32.

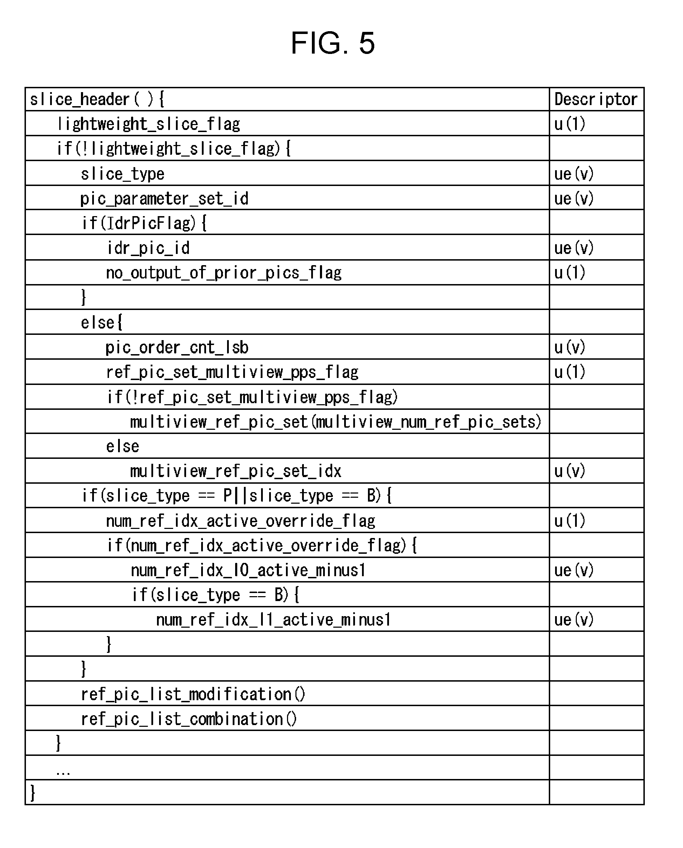

The setting unit 32 sets (generates) the SPS, the PPS and the slice header in relation to the dependent image. The SPS, the PPS and the slice header will be described hereinafter with reference to Figs. 5 to 7 and the like. Furthermore, the setting unit 32 adds the SPS to the encoded data, to which the PPS is added, in sequence units, and delivers the bitstream that is obtained as a result as the encoded bitstream. The setting unit 32 functions as a delivery unit.

Configuration Example of Encoding Unit 31

Fig. 3 is a block diagram showing a configuration example of the encoding unit 31 of Fig. 2.

The encoding unit 31 of Fig. 3 is configured of an A/D conversion unit 121, a screen rearrangement buffer 122, a calculation unit 123, an orthogonal transformation unit 124, a quantization unit 125, a lossless encoding unit 126, an accumulation buffer 127, an inverse quantization unit 128, an inverse orthogonal transformation unit 129, an addition unit 130, a deblocking filter 131, a DPB 132, a screen intra prediction unit 133, a motion prediction and compensation unit 134, a selection unit 135, an RPS generation unit 136 and a rate control unit 137.

The A/D conversion unit 121 of the encoding unit 31 subjects the dependent image, which is an image of a viewpoint direction that differs from the base image, to A/D conversion, outputs the dependent image to the screen rearrangement buffer 122 and causes the screen rearrangement buffer 122 to store the dependent image. The screen rearrangement buffer 122 rearranges the dependent image of frame units that are in the stored order of display into an order for encoding according to a GOP (Group of Picture) structure. The screen rearrangement buffer 122 outputs the rearranged dependent image of frame units to the calculation unit 123, the screen intra prediction unit 133 and the motion prediction and compensation unit 134.

The calculation unit 123 functions as an encoding unit and encodes the encoding-target dependent image by calculating the delta of the prediction images that are supplied from the selection unit 135 and the encoding-target dependent image that is output from the screen rearrangement buffer 122. Specifically, the calculation unit 123 subtracts the prediction image that is supplied from the selection unit 135 from the encoding-target dependent image that is output from the screen rearrangement buffer 122. The calculation unit 123 outputs the image that is obtained as a result of the subtraction to the orthogonal transformation unit 124 as residual information. Furthermore, when the prediction image is not supplied from the selection unit 135, the calculation unit 123 outputs the dependent image that is read out from the screen rearrangement buffer 122 to the orthogonal transformation unit 124 in an unchanged manner as residual information.

The orthogonal transformation unit 124 subjects the residual information from the calculation unit 123 to an orthogonal transformation such as the Discrete Cosine Transform or the Karhunen-Loeve Transform, and supplies the coefficient that is obtained as a result to the quantization unit 125.

The quantization unit 125 quantizes the coefficient that is supplied from the orthogonal transformation unit 124. The quantized coefficient is input to the lossless encoding unit 126.

The lossless encoding unit 126 performs lossless encoding such as variable length encoding (for example, CAVLC (Context-Adaptive Variable Length Coding) or the like) or arithmetic encoding (for example, CABAC (Context-Adaptive Binary Arithmetic Coding) or the like) in relation to the quantized coefficient that is supplied from the quantization unit 125. The lossless encoding unit 126 supplies the encoded data that is obtained as a result of the lossless encoding to the accumulation buffer 127 and causes the accumulation buffer 127 to accumulate the encoded data.

The accumulation buffer 127 temporarily stores the encoded data that is supplied from the lossless encoding unit 126 and supplies the encoded data to the setting unit 32 (Fig. 2) in slice units.

In addition, the quantized coefficient that is output by the quantization unit 125 is also input to the inverse quantization unit 128. After being subjected to inverse quantization, the coefficient is supplied to the inverse orthogonal transformation unit 129.

The inverse orthogonal transformation unit 129 subjects the coefficient that is supplied from the inverse quantization unit 128 to an inverse orthogonal transformation such as the inverse Discrete Cosine Transform or the inverse Karhunen-Loeve Transform, and supplies the residual information that is obtained as a result to the addition unit 130.

The addition unit 130 adds the residual information, which is the decoding-target dependent image that is supplied from the inverse orthogonal transformation unit 129, to the prediction image that is supplied from the selection unit 135 and obtains a dependent image that is locally decoded. Furthermore, when the prediction image is not supplied from the selection unit 135, the addition unit 130 treats the residual information that is supplied from the inverse orthogonal transformation unit 129 as the decoded dependent image that is locally decoded. The addition unit 130 supplies the dependent image that is locally decoded to the deblocking filter 131.

The deblocking filter 131 removes block distortion by filtering the dependent image, which is supplied from the addition unit 130 and is locally decoded. The deblocking filter 131 supplies the dependent image that is obtained as a result to the screen intra prediction unit 133 and the DPB 132 and causes the dependent image to be accumulated.

The DPB (decoded picture buffer) 132 stores the dependent image, which is supplied from the deblocking filter 131 and is locally decoded. In addition, the decoded image of the base image that is supplied from the base encoding unit 11 is also supplied to the DPB 132 and is stored therein. The dependent image and the base image that are accumulated in the DPB 132 are supplied to the motion prediction and compensation unit 134 as reference images.

The screen intra prediction unit 133 performs screen intra prediction of all intra prediction modes that are candidates using the post-block distortion removal dependent image that is supplied from the deblocking filter 131 as a reference image, and generates the prediction image.

In addition, the screen intra prediction unit 133 calculates cost function values (described in detail hereinafter) in relation to all the intra prediction modes that are candidates. Furthermore, the screen intra prediction unit 133 determines the intra prediction mode with the smallest cost function value to be an optimal intra prediction mode. The screen intra prediction unit 133 supplies the prediction image that is generated using the optimal intra prediction mode and the corresponding cost function value to the selection unit 135. When the screen intra prediction unit 133 receives notification of the selection of the prediction image that is generated using the optimal intra prediction mode from the selection unit 135, the screen intra prediction unit 133 supplies the screen intra prediction information that indicates the optimal intra prediction mode and the like to the setting unit 32 of Fig. 2. The screen intra prediction information is included in the slice header as the information relating to the encoding.

Furthermore, the cost function value is also referred to as an RD (Rate Distortion) cost. For example, the cost function value is calculated based on a method of one of a High Complexity mode and a Low Complexity mode, such as those defined in the JM (Joint Model), which is the reference software in the H.264/AVC method.

Specifically, when the High Complexity mode is adopted as the calculation method of the cost function value, up to the lossless encoding is temporarily performed in relation to all the prediction modes that are candidates, and the cost function value that is represented in the following Equation (3) is calculated in relation to each prediction mode.

$$\mathrm{Cost(Mode)} = D + \lambda \cdot R \ \ldots \ (3)$$

D is the delta (the distortion) of the original image and the decoded image, R is the generated code amount that includes up to the coefficient of the orthogonal transform, and $\lambda$ is the Lagrange multiplier that is provided as a function of the quantization parameter QP.

On the other hand, when the Low Complexity mode is adopted as the calculation method of the cost function value, the generation of the decoded image, and, the calculation of a header bit such as the information indicating the prediction mode are performed in relation to all the prediction modes that are candidates, and the cost function that is represented by the following Equation (4) is calculated in relation to each prediction mode.

$$Cost(Mode) = D + QPtoQuant(QP) \cdot Header\_Bit \dots (4)$$

D is the delta (the distortion) of the original image and the decoded image, Header_Bit is the header bit in relation to the prediction mode, QPtoQuant is a function that is provided as a function of the quantization parameter QP.

In the Low Complexity mode, it is sufficient to only generate the decoded image in relation to all the prediction modes, and since it is not necessary to perform lossless encoding, the required calculation amount is little. Furthermore, here, it is assumed that the High Complexity mode is adopted as the calculation mode of the cost function value.

The motion prediction and compensation unit 134 generates a motion vector by performing the motion prediction process of all the inter prediction modes that are candidates based on the dependent image that is supplied from the screen rearrangement buffer 122 and the reference image that is supplied from the DPB 132. Specifically, the motion prediction and compensation unit 134 generates the motion vector by matching the reference image with the dependent image that is supplied from the screen rearrangement buffer 122 for each inter prediction mode.

Furthermore, the inter prediction mode is the information that indicates the size, the prediction direction, and the reference index of the blocks that are the targets of inter prediction. The prediction directions include the prediction (L0 prediction) of a forward direction that uses a reference image with a display time that is sooner than that of the dependent image that is the target of the inter prediction, the prediction (L1 prediction) of a backward direction that uses a reference image with a display time that is later than that of the dependent image that is the target of the inter prediction, and the prediction (Bi-prediction) of both directions that uses a reference image with a display time that is sooner, and a reference image with a display time that is later, than that of the dependent image that is the target of the inter prediction. In addition, the reference index is a number for specifying the reference image. For example, the closer the reference index of the image is to the dependent image that is the target of the inter prediction, the smaller the number.

In addition, the motion prediction and compensation unit 134 functions as a prediction image generation unit and performs the motion compensation process by reading out the reference image from the DPB 132 based on the generated motion vector for each inter prediction mode. The motion prediction and compensation unit 134 supplies the prediction image that is generated as a result to the selection unit 135.

In addition, using the prediction image, the motion prediction and compensation unit 134 calculates the cost function value in relation to each inter prediction mode, and determines the inter prediction mode in which the cost function value is smallest to be the optimal inter measurement mode. Furthermore, the motion prediction and compensation unit 134 supplies the prediction image and the cost function value that are generated using the optimal inter prediction mode to the selection unit 135.

Furthermore, when the motion prediction and compensation unit 134 receives notification of the selection of the prediction image that is generated using the optimal inter prediction mode from the selection unit 135, the motion prediction and compensation unit 134 outputs the motion information to the setting unit 32 of Fig. 2. The motion information is configured of the optimal inter prediction mode, a prediction vector index, a motion vector residual, which is a delta obtained by subtracting the motion vector indicated by the prediction vector index from the present motion vector, and the like. Furthermore, the prediction vector index is information for specifying one motion vector of the motion vectors that are candidates used in the generation of the prediction image of the decoded dependent image. The motion information is included in the slice header as the information relating to the encoding.

The selection unit 135 determines one of an optimal intra prediction mode and an optimal inter prediction mode to be the optimal prediction mode based on the cost function values that are supplied from the screen intra prediction unit 133 and the motion prediction and compensation unit 134. Furthermore, the selection unit 135 supplies the prediction image of the optimal prediction mode to the calculation unit 123 and the addition unit 130. In addition, the selection unit 135 notifies the screen intra prediction unit 133 or the motion prediction and compensation unit 134 of the selection of the prediction image of the optimal prediction mode.

The RPS generation unit 136 controls the dependent image and the base image that are accumulated in the DPB 132 as the reference image. Specifically, the RPS generation unit 136 determines the image to supply to the motion prediction and compensation unit 134 as the reference image from the dependent image and (the decoded image of) the base image that are accumulated in the DPB 132 and causes the selected image to be supplied to the motion prediction and compensation unit 134. In addition, the RPS generation unit 136, the RPS generation unit 136 determines unnecessary pictures from the pictures (the dependent image and the base image) that are accumulated in the DPB 132 and removes the unnecessary pictures.

In addition, the RPS generation unit 136 generates the RPS information that indicates the state of the DPB 132 of the encoding-target dependent image, and supplies the RPS information to the setting unit 32 of Fig. 2. The RPS generation unit 136 function as the setting unit that sets the RPS information of the encoding-target dependent image.

The rate control unit 137 controls the rate of the quantization operation of the quantization unit 125 such that an overflow or an underflow does not occur based on the encoded data that is accumulated in the accumulation buffer 127.

Configuration Examples of SPS and Slice Header

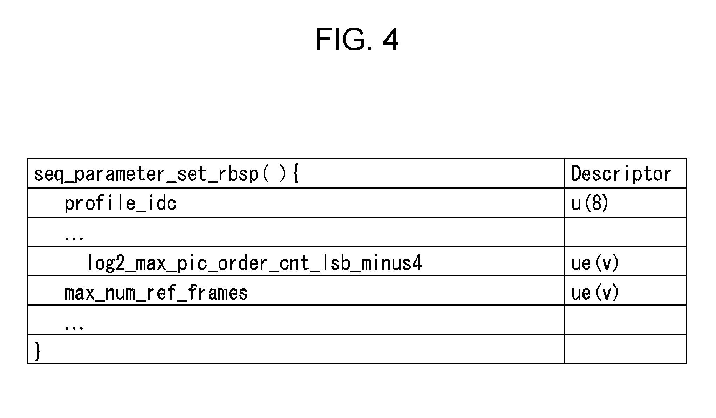

Fig. 4 is a diagram showing an example of the syntax of the SPS (= seq_parameter_set_rbsp()), and Fig. 5 is a diagram showing an example of the syntax of the slice header (= Slice_header()).

An RPS list, which is the RPS information, is defined in the PPS or the slice header. The RPS list that is referenced from a plurality of pictures is defined in the PPS, and the RPS list that is specialized for a specific picture is defined in the slice header. In the slice header, when ref_pic_set_multiview_pps_flag of the slice header shown in Fig. 5 is "0" (when !ref_pic_set_multiview_pps_flag is "1"), multiview_ref_pic_set (multiview_num_ref_pic_sets) is read out. In other words, when ref_pic_set_multiview_pps_flag is "0", the RPS list that is defined in the slice header is referenced as the RPS that is specialized for a specific picture.

On the other hand, when ref_pic_set_multiview_pps_flag is "1", the RPS list that is defined in the PPS, which is shared by a plurality of pictures and is specified by an index that multiview_ref_pic_set_idx indicates, is referenced. In other words, when ref_pic_set_multiview_pps_flag is "1", of the RPS lists that are defined in the PPS as shared by a plurality of pictures, the RPS list that is specified by the index that multiview_ref_pic_set_idx indicates is referenced.

Structure Example of PPS

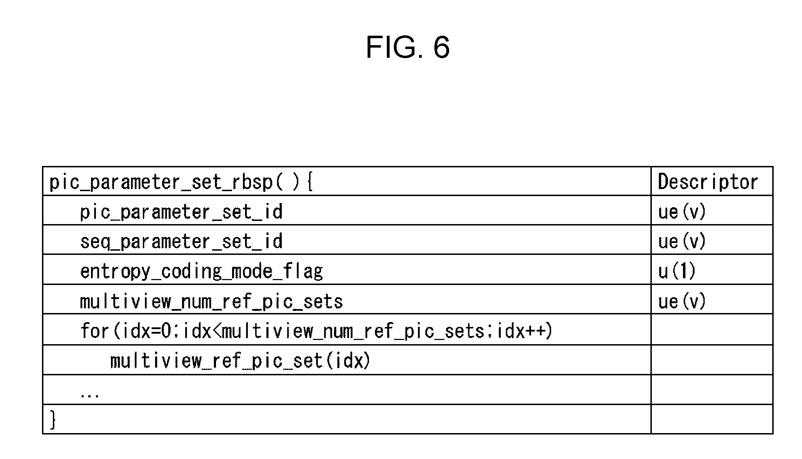

Fig. 6 is a diagram showing an example of the syntax of the PPS (= pic_parameter_set_rbsp()).

The multiview_num_ref_pic_sets shown in Fig. 6 indicates the total number of RPS lists (RPS lists). A predetermined index (a number that indicates the RPS list) is input to an idx of multiview_ref_pic_set(idx) of the for clause of Fig. 6, and multiview_ref_pic_set(idx), that is, the RPS list is called. The argument idx of multiview_ref_pic_set(idx) is a value within the range of $0 \leq idx < multiview\_num\_ref\_pic\_sets$.

Structure Example of RPS

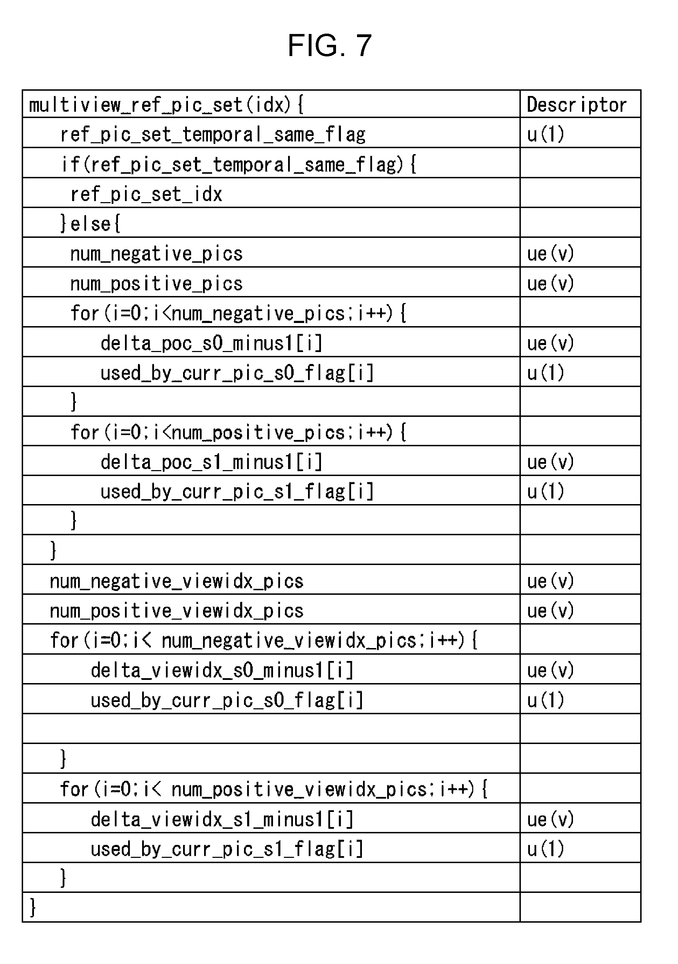

Fig. 7 is a diagram showing an example of the syntax of the RPS (= multiview_ref_pic_set(idx)).

In Fig. 7, the first ref_pic_set_temporal_same_flag is the information (the flag) that indicates whether or not the pattern of the picture that is held in the DPB 132 is the same as one of the RPS lists that are defined by the base image.

When the same as one of the RPS lists that are defined by the base image, the ref_pic_set_temporal_same_flag is "1". Therefore, when ref_pic_set_temporal_same_flag = "1", since the same as one (of the patterns) of the RPS list of the base image, the RPS list is specified by ref_pic_set_idx. In this case, the RPS generation unit 136 manages (controls) the picture of the time direction that is held in the DPB 132 using the RPS information of the base image that is supplied from the base encoding unit 11, that is, using the RPS list that is the same of the plurality of RPS lists of the base image.

On the other hand, when different from all the patterns of the RPS list that is defines in the base image, the ref_pic_set_temporal_same_flag is "0". Therefore, when ref_pic_set_temporal_same_flag = "0", the picture of the time direction that is held in the DPB 132 is defined by the RPS generation unit 136. Therefore, from ref_pic_set_temporal_same_flag to the line above num_negative_viewidx_pics of the RPS shown in Fig. 7 can be said to be the time direction management information for managing the picture (the dependent image) of the time direction that is held in the DPB 132.

On the other hand, the denotation of num_negative_viewidx_pics, num_positive_viewidx_pics and below is a definition for managing the base image of a view direction (a viewpoint direction) that differs from that of the dependent image and is supplied from the base encoding unit 11. In other words, the denotation of num_negative_viewidx_pics, num_positive_viewidx_pics and below shown in Fig. 7 can be said to be the view direction management information for managing the picture (the base image) of a different view direction (the viewpoint direction) that is held in the DPB 132.

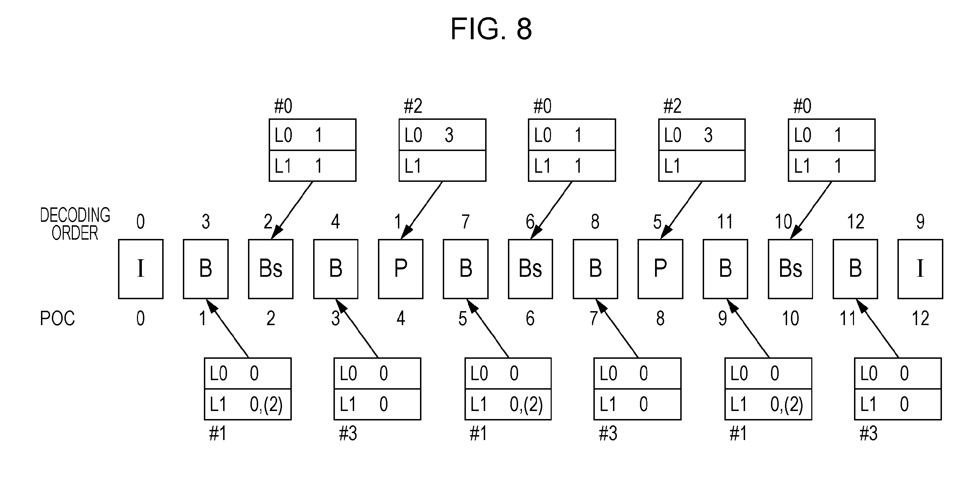

In order to manage the picture of a different view direction (the viewpoint direction), the view direction is specified by ViewIdx (= viewidx). In other words, ViewIdx is an index of the viewpoint direction that corresponds to a POC (Picture Order Count). For example, ViewIdx is set to a number or the like that is allotted from the leftmost in order in the rightward direction to a plurality of cameras that image the multi-view image (the base image and the dependent image). Therefore, it is possible to clearly specify the picture of a view direction using ViewIdx. The management of the picture using ViewIdx is performed in the same manner as the case of the POC that is described hereinafter with reference to Fig. 8 in the RPS generation unit 136. However, in the present embodiment, the picture (the base image) of a different view direction is limited to a picture of the same time (the same POC) as that of a decoded picture that is held in the DPB 132.

num_negative_viewidx_pics indicates the number of pictures that are in front of the decoded picture in the view direction. num_positive_viewidx_pics indicates the number of pictures that are behind the decoded picture in the view direction. The sum of num_negative_viewidx_pics and num_positive_viewidx_pics indicates the total number of pictures of the view direction of the DPB 132 at a point in time at which the decoded picture is decoded.

delta_viewidx_s0_minusl[i] and delta_viewidx_s1_minus1[i] indicate the values of the delta values -1 of the view direction (ViewIdx) of the decoded picture and the target picture, which are for specifying the picture of a view direction that is held in the DPB 132. delta_viewidx_s0_minusl[i] corresponds to the delta value -1 of the view direction of the forward direction, and delta_viewidx_s1_minus1[i] corresponds to the delta value -1 of the view direction of the backward direction. delta_viewidx_s0_minusl[i] and delta_viewidx_s1_minus1[i] are also denoted concisely as ΔViewIdx.

used_by_curr_pic_s0_flag[i] and used_by_curr_pic_s1_flag[i] are flags that indicate whether or not the target picture is a picture that is referenced from the decoded picture. When used_by_curr_pic_s0_flag[i] or used_by_curr_pic_s1_flag[i] is "1", this indicates that the target picture is a reference picture. When used_by_curr_pic_s0_flag[i] or used_by_curr_pic_s1_flag[i] is "0", this indicates that the target picture is not a reference picture, but is held in order to be used in the future. The fact that used_by_curr_pic_s0_flag[i] is the view direction of the forward direction, and used_by_curr_pic_s1_flag[i] is the view direction of the backward direction is the same as ΔViewIdx.

Furthermore, when there are two view directions, that is, when there are two viewpoints, the definition from num_negative_viewidx_pics to used_by_curr_pic_s1_flag[i] can be indicated using only a flag that indicates whether or not the picture of a difference view direction is held in the DPB 132. When the flag indicates that a picture of a different view direction is held in the DPB 132, the picture of the different view direction inevitably becomes the picture that is referenced (the reference picture).

Example of Encoding

Fig. 8 shows an example of the encoding of the time direction (the POC).

Fig. 8 is an example of the encoding when the number of pictures that can be referenced by the current picture in the L0 direction and the L1 direction is 1, the total number of pictures held in the DPB 132 is 3, and the total number of RPS lists is 4.

In Fig. 8, for example, when a Bs picture of POC = 2 is the current picture (the decoded picture), of the four RPS lists from RPS #0 to RPS #3, the RPS list of RPS #0 is read out. The Bs picture of POC = 2 references the I picture of POC = 0 in the chronologically forward direction (the L0 direction); thus, the POC of the current picture - the POC of the target picture - 1 = 2 - 0 - 1 = 1. In addition, the P picture of POC = 4 is referenced in the chronologically backward direction (the L1 direction); thus, the POC of the current picture - the POC of the target picture - 1 = 4 - 2 - 1 = 1.

For example, when the P picture of POC = 4 is the current picture, of the four RPS lists from RPS #0 to RPS #3, the RPS list of RPS #2 is read out. The P picture of POC = 4 references only the I picture of POC = 0 in the chronologically forward direction (the L0 direction); thus, the L0 direction becomes the POC of the current picture - the POC of the target picture - 1 = 4 - 0 - 1 = 3.

When the B picture of POC = 5 is the current picture, of the four RPS lists from RPS #0 to RPS #3, the RPS list of RPS #1 is read out. The B picture of POC = 5 references the P picture of POC = 4 in the chronologically forward direction (the L0 direction); thus, the POC of the current picture - the POC of the target picture - 1 = 5 - 4 - 1 = 0. In addition, the Bs picture of POC = 6 is referenced in the chronologically backward direction (the L1 direction); thus, the POC of the current picture - the POC of the target picture - 1 = 6 - 5 - 1 = 0. Here, the POC of the current picture - the POC of the target picture - 1 = 8 - 5 - 1 = 2, which is the value that corresponds to the P picture of POC = 8 of the chronologically backward direction (the L1 direction), is surrounded with brackets (). The brackets correspond to used_by_curr_pic_s1_flag[i] of Fig. 7, and indicate a non-referenced picture that is held in the DPB 132 but not referenced.

The description given above is a description of the encoding of the time direction (the POC); however, the encoding is also performed in the view direction in the same manner as the case of the time direction using ViewIdx. By managing the picture in the same manner as the case of the POC using ViewIdx, it is also possible to specify a picture that is present in the DPB 132 in a plurality of views (viewpoints), and, it is possible to distinguish the reference picture and the non-reference picture.

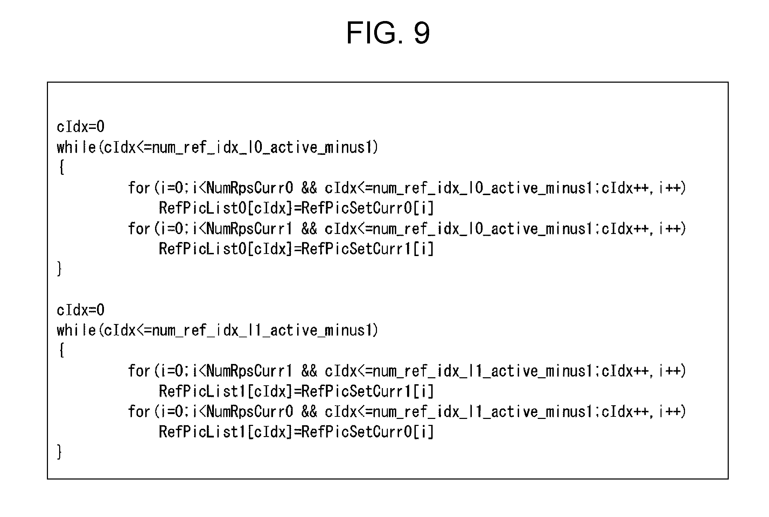

Fig. 9 is a diagram illustrating the program of the allocation process of the reference index.

In Fig. 9, num_ref_idx_10_active_minus1 indicates the number of reference pictures of the L0 direction that are chronologically in front, and num_ref_idx_l1_active_minus1 indicates the number of reference pictures of the L1 direction that are chronologically behind.

In the same manner as the B picture of AVC (Advanced Video Coding), according to the program shown in Fig. 9, a small reference index is allocated to a picture, which is a picture that comes chronologically before the decoded picture in the L0 direction in the POC order, where ΔPOC is small. A small reference index is allocated to a picture, which is a picture that comes chronologically after the decoded picture in the L1 direction, where the ΔPOC is small. An allocation is also performed in relation to the view index of the view direction in the same manner as the allocation of the reference index of the time direction.

Description of Encoding Process

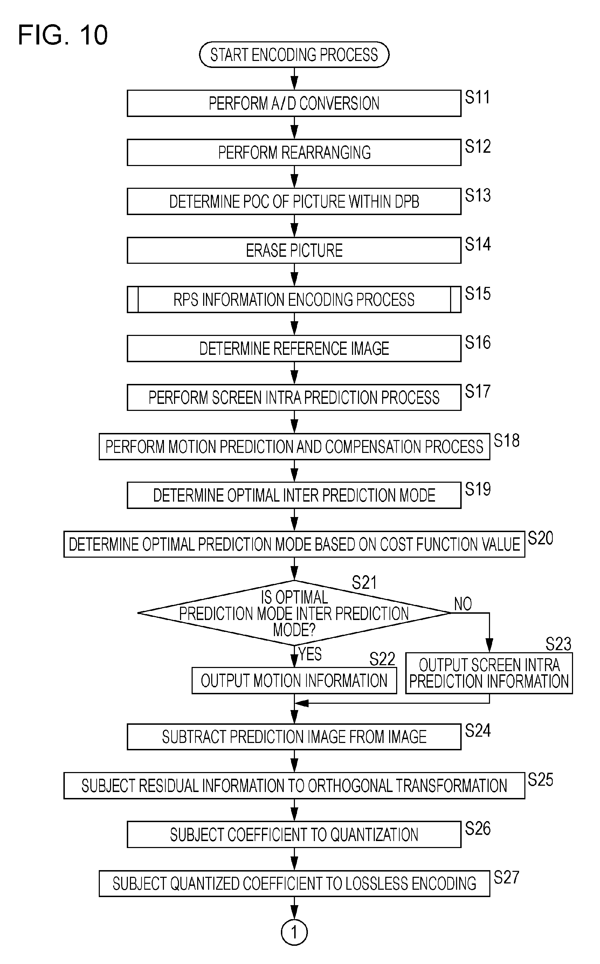

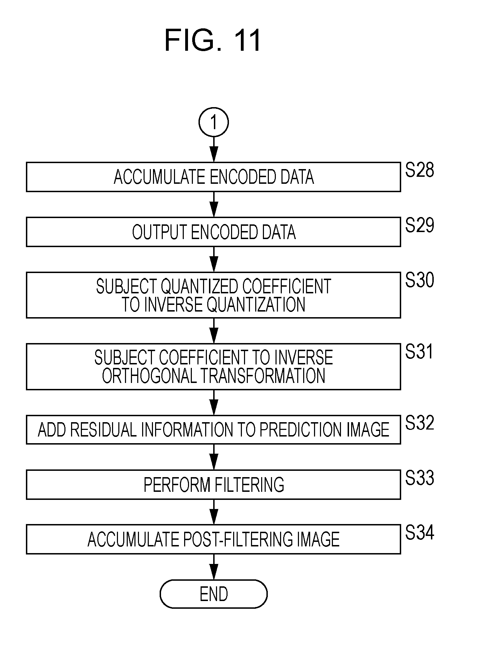

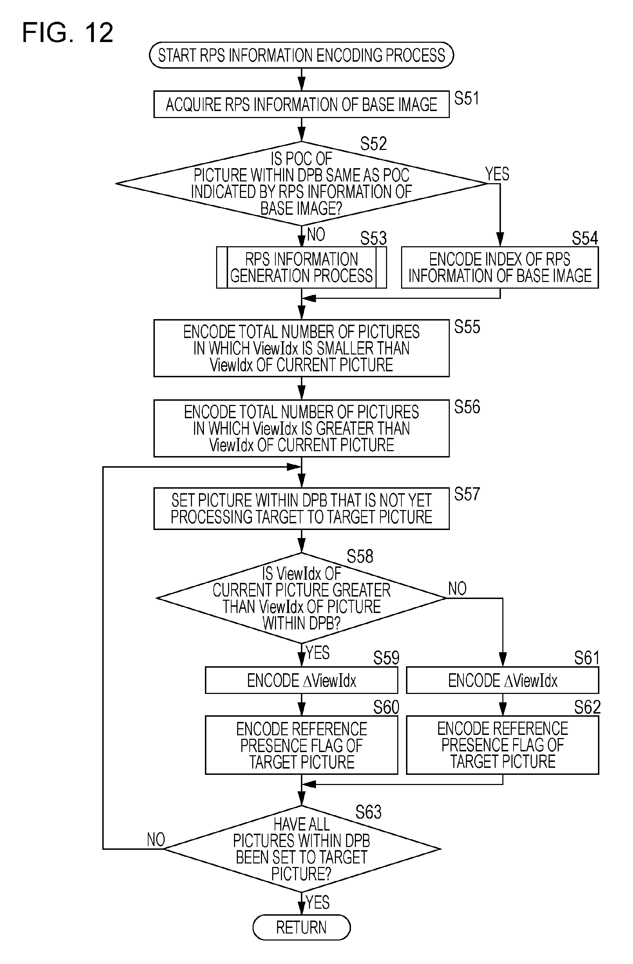

Figs. 10 and 11 are a flowchart that illustrates the encoding process of the encoding unit 31 of Fig. 3.
In step S11 of Fig. 10, the A/D conversion unit 121 of the encoding unit 31 subjects the dependent image of frame units of a predetermined viewpoint that is input to A/D conversion. The A/D conversion unit 121 outputs the dependent image to the screen rearrangement buffer 122 and causes the screen rearrangement buffer 122 to store the dependent image.
In step S12, the screen rearrangement buffer 122 rearranges the dependent image of the frames of the stored order of display into an order for encoding according to the GOP structure. The screen rearrangement buffer 122 supplies the post-rearrangement dependent image of frame units to the calculation unit 123, the screen intra prediction unit 133 and the motion prediction and compensation unit 134.
In step S13, the RPS generation unit 136 determines the POC of the picture within the DPB 132 according to the GOP structure.
In step S14, the RPS generation unit 136 erases unnecessary pictures from the DPB 132.
In step S15, the RPS generation unit 136 performs an RPS information encoding process that encodes the RPS information. The process will be described with reference to Fig. 12.
In step S16, the RPS generation unit 136 determines the picture to supply to the motion prediction and compensation unit 134 as the reference image from the pictures within the DPB 132 and causes the determined picture to be supplied to the motion prediction and compensation unit 134.
In step S17, the screen intra prediction unit 133 performs the screen intra prediction process of all intra prediction modes that are candidates using the reference image that is supplied from the addition unit 130. At this time, the screen intra prediction unit 133 calculates cost function values in relation to all the intra prediction modes that are candidates. Furthermore, the screen intra prediction unit 133 determines the intra prediction mode with the smallest cost function value to be an optimal intra prediction mode. The screen intra prediction unit 133 supplies the prediction image that is generated using the optimal intra prediction mode and the corresponding cost function value to the selection unit 135.
In step S18, the motion prediction and compensation unit 134 performs the motion prediction and compensation process based on the dependent image that is supplied from the screen rearrangement buffer 122 and the reference image that is supplied from the DPB 132.
Specifically, the motion prediction and compensation unit 134 generates a motion vector by performing the motion prediction process of all the inter prediction modes that are candidates based on the dependent image that is supplied from the screen rearrangement buffer 122 and the reference image that is supplied from the DPB 132. In addition, the motion prediction and compensation unit 134 performs the motion compensation process by reading out the reference image from the DPB 132 based on the generated motion vector for each inter prediction mode. The motion prediction and compensation unit 134 supplies the prediction image that is generated as a result to the selection unit 135.
In step S19, the motion prediction and compensation unit 134 calculates the cost function value in relation to each inter prediction mode, and determines the inter prediction mode in which the cost function value is smallest to be the optimal inter measurement mode. Furthermore, the motion prediction and compensation unit 134 supplies the prediction image and the cost function value that are generated using the optimal inter prediction mode to the selection unit 135.
In step S20, the selection unit 135 determines, of an optimal intra prediction mode and an optimal inter prediction mode, the one in which the cost function value is lowest to be the optimal prediction mode based on the cost function values that are supplied from the screen intra prediction unit 133 and the motion prediction and compensation unit 134. Furthermore, the selection unit 135 supplies the prediction image of the optimal prediction mode to the calculation unit 123 and the addition unit 130.
In step S21, the selection unit 135 determines whether or not the optimal prediction mode is the optimal inter prediction mode. When the optimal prediction mode is determined to be the optimal inter prediction mode in step S21, the selection unit 135 notifies the motion prediction and compensation unit 134 of the selection of the prediction image that is generated using the optimal inter prediction mode.
Furthermore, in step S22, the motion prediction and compensation unit 134 outputs the motion information to the setting unit 32 (Fig. 2) and the process proceeds to step S24.
On the other hand, when the optimal prediction mode is determined not to be the optimal inter prediction mode in step S21, that is, when the optimal prediction mode is the optimal intra prediction mode, the selection unit 135 notifies the screen intra prediction unit 133 of the selection of the prediction image that is generated using the optimal intra prediction mode.
Furthermore, in step S23, the screen intra prediction unit 133 outputs the screen intra prediction information to the setting unit 32 and the process proceeds to step S24.

In step S24, the calculation unit 123 subtracts the prediction image that is supplied from the selection unit 135 from the dependent image that is supplied from the screen rearrangement buffer 122. The calculation unit 123 outputs the image that is obtained as a result of the subtraction to the orthogonal transformation unit 124 as residual information.

In step S25, the orthogonal transformation unit 124 subjects the residual information from the calculation unit 123 to orthogonal transformation, and supplies the coefficient that is obtained as a result to the quantization unit 125.

In step S26, the quantization unit 125 quantizes the coefficient that is supplied from the orthogonal transformation unit 124. The quantized coefficient is input to the lossless encoding unit 126 and the inverse quantization unit 128.

In step S27, the lossless encoding unit 126 subjects the quantized coefficient that is supplied from the quantization unit 125 to lossless encoding.

In step S28 of Fig. 11, the lossless encoding unit 126 supplies the encoded data that is obtained as a result of the lossless encoding process to the accumulation buffer 127 and causes the accumulation buffer 127 to accumulate the encoded data.

In step S29, the accumulation buffer 127 outputs the encoded data that is accumulated to the setting unit 32.

In step S30, the inverse quantization unit 128 subjects the quantized coefficient that is supplied from the quantization unit 125 to inverse quantization.

In step S31, the inverse orthogonal transformation unit 129 subjects the coefficient that is supplied from the inverse quantization unit 128 to inverse orthogonal transformation, and supplies the residual information that is obtained as a result to the addition unit 130.

In step S32, the addition unit 130 adds the residual information that is supplied from the inverse orthogonal transformation unit 129 to the prediction image that is supplied from the selection unit 135 and obtains a dependent image (a decoded picture) that is locally decoded. The addition unit 130 supplies the dependent image that is obtained to the deblocking filter 131.

In step S33, the deblocking filter 131 removes block distortion by performing filtering on the dependent image, which is supplied from the addition unit 130 and is locally decoded.

In step S34, the deblocking filter 131 supplies the post-filtering dependent image to the DPB 132, causes the DPB 132 to accumulate the dependent image, and the process ends. The dependent image that is accumulated in the DPB 132 is output to the motion prediction and compensation unit 134 as a reference image according to the control of the RPS control unit 136.

Furthermore, the processes of steps S17 to S34 of Figs. 10 and 11 are performed in coding unit units, for example. In addition, in the encoding process of Figs. 10 and 11, in order to facilitate description, the screen intra prediction process and the motion compensation process are always performed; however, there is also a case in which only one is performed, depending on the picture type or the like.

Description of RPS Information Encoding Process

Description will be given of the RPS information encoding process of step S15 of Fig. 10 with reference to Fig. 12.

First, in step S51, the RPS generation unit 136 acquires the RPS information of the base image.

In step S52, the RPS generation unit 136 determines whether or not the POC of the picture within the DPB 132 is the same as the POC that is indicated by the RPS information of the base image. In step S52, when the POC of the picture within the DPB 132 is determined to be the same as the POC that is indicated by the RPS information of the base image, the process proceeds to step S53, and the RPS generation unit 136 encodes the index of the RPS information of the base image.

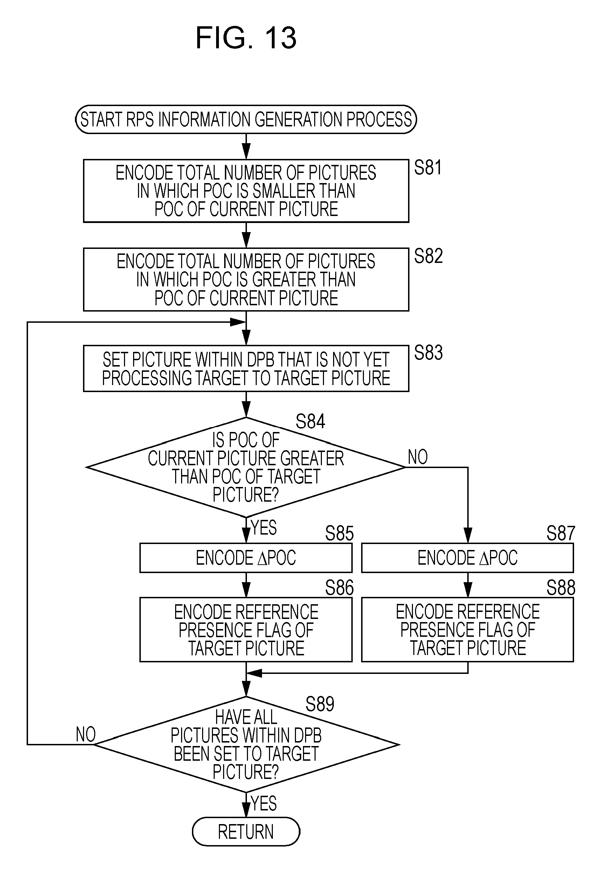

On the other hand, in step S52, when the POC of the picture within the DPB 132 is determined not to be the same as the POC that is indicated by the RPS information of the base image, the process proceeds to step S54, and the RPS generation unit 136 executes the RPS information generation process described hereinafter in Fig. 13.

In step S55, the RPS generation unit 136 encodes the total number of pictures in which the ViewIdx is smaller than the ViewIdx of the current picture.

In step S56, the RPS generation unit 136 encodes the total number of pictures in which the ViewIdx is greater than the ViewIdx of the current picture.

In step S57, the RPS generation unit 136 sets the picture within the DPB 132 that is not yet a processing target to be the target picture.

Furthermore, in step S58, the RPS generation unit 136 determines whether or not the ViewIdx of the current picture is greater than the ViewIdx of the target picture.

In step S58, when the ViewIdx of the current picture is determined to be greater than the ViewIdx of the target picture, the process proceeds to step S59, and the RPS generation unit 136 encodes ΔViewIdx = delta_viewidx_s0_minus1[i], that is, encodes the delta - 1 in which the ViewIdx of the target picture is subtracted from the ViewIdx of the current picture.

Furthermore, in step S60, the RPS generation unit 136 encodes a reference presence flag (= used_by_curr_pic_s0_flag[i]) of the target picture.

On the other hand, in step S58, when the ViewIdx of the current picture is determined to be smaller than the ViewIdx of the target picture, the process proceeds to step S61, and the RPS generation unit 136 encodes ΔViewIdx = delta_viewidx_s1_minus1[i], that is, encodes the delta - 1 in which the ViewIdx of the current picture is subtracted from the ViewIdx of the target picture.

Furthermore, in step S62, the RPS generation unit 136 encodes a reference presence flag (= used_by_curr_pic_s1_flag[i]) of the target picture.

In step S63, the RPS generation unit 136 determines whether or not all of the pictures within the DPB 132 have been set to the target picture.

In step S63, when all of the pictures within the DPB 132 are determined not to have been set to the target picture, the process returns to step S57 and the subsequent processes are repeated.

On the other hand, in step S63, when all of the pictures within the DPB 132 are determined to have been set to the target picture, the process returns to Fig. 10.

Description of RPS Information Generation Process

Fig. 13 is a flowchart of the RPS information generation process of step S54 of Fig. 12.

In the RPS information generation process, in step S81, the RPS generation unit 136 encodes the total number of pictures in which the POC is smaller than the POC of the current picture.

In step S82, the RPS generation unit 136 encodes the total number of pictures in which the POC is greater than the POC of the current picture.

In step S83, the RPS generation unit 136 sets the picture within the DPB 132 that is not yet a processing target to be the target picture.

Furthermore, in step S84, the RPS generation unit 136 determines whether or not the POC of the current picture is greater than the POC of the target picture.

In step S84, when the POC of the current picture is determined to be greater than the POC of the target picture, the process proceeds to step S85, and the RPS generation unit 136 encodes ΔPOC = delta_poc_s0_minus1[i], that is, encodes the delta - 1 in which the POC of the target picture is subtracted from the POC of the current picture.

Furthermore, in step S86, the RPS generation unit 136 encodes a reference presence flag (= used_by_curr_pic_s0_flag[i]) of the target picture.

On the other hand, in step S84, when the POC of the current picture is determined to be smaller than the POC of the target picture, the process proceeds to step S87, and the RPS generation unit 136 encodes ΔPOC = delta_poc_s1_minus1[i], that is, encodes the delta - 1 in which the POC of the current picture is subtracted from the POC of the target picture.

Furthermore, in step S88, the RPS generation unit 136 encodes a reference presence flag (= used_by_curr_pic_s1_flag[i]) of the target picture.

In step S89, the RPS generation unit 136 determines whether or not all of the pictures within the DPB 132 have been set to the target picture.

In step S89, when all of the pictures within the DPB 132 are determined not to have been set to the target picture, the process returns to step S83, and the subsequent processes are repeated.

On the other hand, in step S89, when all of the pictures within the DPB 132 are determined to have been set to the target picture, the process returns to Fig. 12.

Description of Setting Process

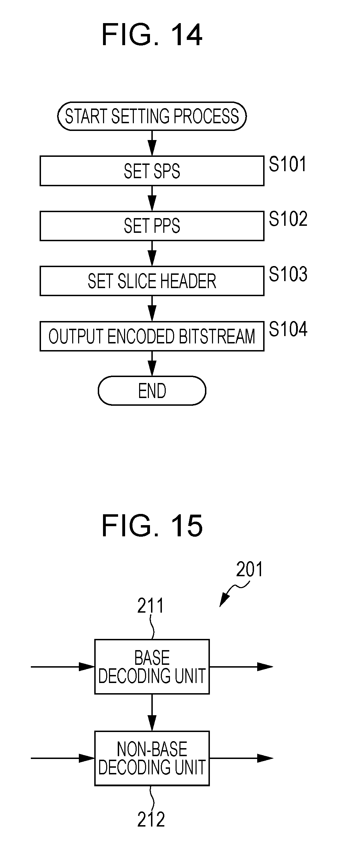

Fig. 14 is a flowchart of the setting process according to the setting unit 32 of Fig. 2.

In the setting process, first, in step S101, the setting unit 32 sets the SPS.

In step S102, the setting unit 32 sets the PPS.

In step S103, the setting unit 32 sets the slice header.

In step S104, the setting unit 32 outputs an encoded bitstream of the encoded data to which the SPS, the PPS and the slice header are added, then the process ends.

As described above, (the non-base encoding unit 12 of) the encoding device 10 defines the RPS of the dependent image in a form that references the RPS of the base image, and performs delivery. Therefore, it is possible to reduce the code amount of the RPS in the dependent image. In other words, it is possible to efficiently deliver the RPS information of the dependent image. This is valid when the referential relationships of the base image and the dependent image are the same.

In addition, in the non-base encoding unit 12 of the encoding device 10, the base image of a different view direction that is held in the DPB 132 is managed (controlled) using the ViewIdx in the same manner as the case of the POC. Therefore, it is also possible to realize the management of the DPB 132 in a plurality of views (viewpoints). In other words, it is possible to specify the picture of a different view direction that is present in the DPB 132, and, it is possible to distinguish the reference picture from the non-reference picture.

Configuration Example of One Embodiment of Decoding Device

Fig. 15 is a block diagram showing a configuration example of an embodiment of the decoding device, which is the image processing device to which the present technology is applied.

A decoding device 201 of Fig. 15 is a device that decodes the encoded bitstream that is delivered from the encoding device 10 of Fig. 1, and configured of a base decoding unit 211 and a non-base decoding unit 212.

The base decoding unit 211 decodes the encoded bitstream of the base image that is encoded by the base encoding unit 11 of Fig. 1 and delivered, and generates and outputs the base image that is obtained as a result. The base decoding unit 211 supplies the decoded image of the base image and the RPS information that are obtained when decoding the encoded bitstream of the base image to the non-base decoding unit 212.

The non-base decoding unit 212 decodes the encoded bitstream of the dependent image that is encoded by the non-base encoding unit 12 of Fig. 1 and delivered, and generates and outputs the dependent image that is obtained as a result. The non-base decoding unit 212 receives the decoded image of the base image and the RPS information that are supplied from the base decoding unit 212 and performs decoding using these.

Configuration Example of Non-Base Decoding Unit 212

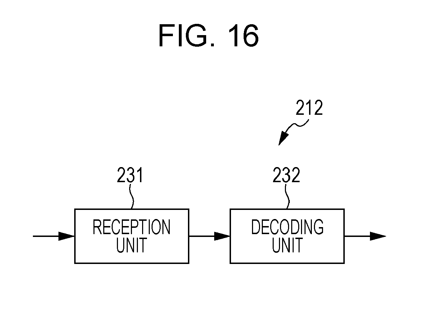

Fig. 16 is a block diagram showing a configuration example of the non-base decoding unit 212 of Fig. 15.

The non-base decoding unit 212 is configured of a reception unit 231 and a decoding unit 232.

The reception unit 231 receives the encoded bitstream of the dependent image that is encoded by the non-base encoding unit 12 of Fig. 1 and delivered. The reception unit 231 subjects the encoded bitstream to a process of demultiplexing into the SPS, the PPS, the slice header and the encoded data and supplies these to the decoding unit 232. In addition, the reception unit 231 receives the decoded image of the base image and the RPS information that are supplied from the base decoding unit 212. Furthermore, the reception unit 231 supplies the demultiplexed encoded bitstream and the like, the decoded image of the base image and the RPS information from the base decoding unit 212 to the decoding unit 232.

A decoding unit 232 decodes the encoded data of the dependent image of slice units using a method that corresponds to the encoding method in the encoding unit 31 (Fig. 2) based on the SPS, the PPS, the slice header, and the encoded data of the dependent image, and the decoded image of the base image and the RPS information. The decoding unit 232 outputs the dependent image that is obtained as a result of the decoding.

Configuration Example of Decoding Unit 232

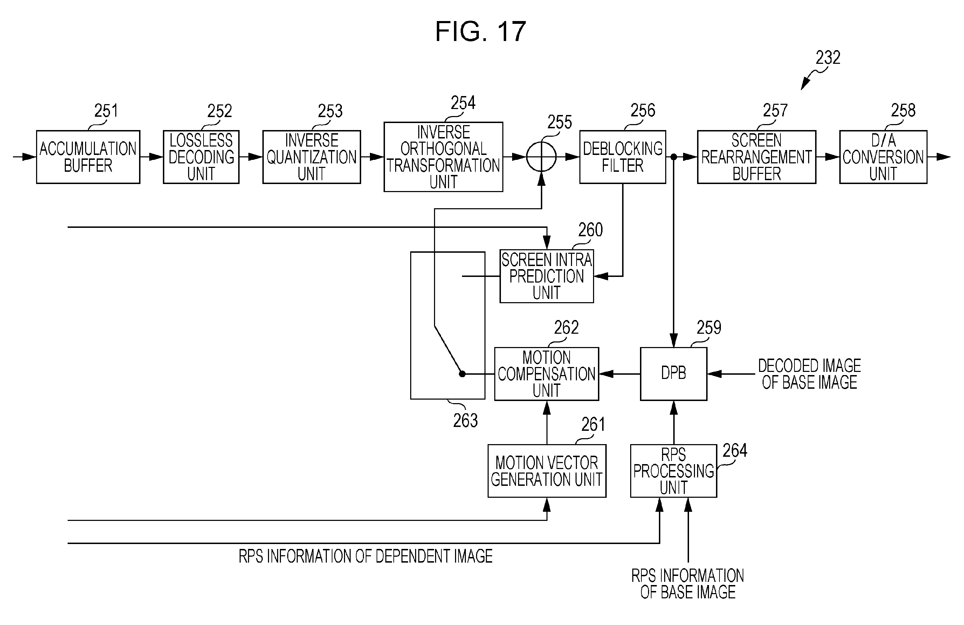

Fig. 17 is a block diagram showing a configuration example of the decoding unit 232 of Fig. 16.

The decoding unit 232 of Fig. 17 is configured of an accumulation buffer 251, a lossless decoding unit 252, an inverse quantization unit 253, an inverse orthogonal transformation unit 254, an addition unit 255, a deblocking filter 256, a screen rearrangement buffer 257, a D/A conversion unit 258, a DPB 259, a screen intra prediction unit 260, a motion vector generation unit 261, a motion compensation unit 262, a switch 263 and an RPS processing unit 264.

The accumulation buffer 251 receives the encoded data of the dependent image of slice units from the reception unit 231 of Fig. 16 and accumulates the encoded data. The accumulation buffer 251 supplies the encoded data that is accumulated to the lossless decoding unit 252.

The lossless decoding unit 252 obtains the quantized coefficient by subjecting the encoded data from the accumulation buffer 251 to lossless decoding such as variable length decoding or arithmetic decoding. The lossless decoding unit 252 supplies the quantized coefficient to the inverse quantization unit 253.

The inverse quantization unit 253, the inverse orthogonal transformation unit 254, the addition unit 255, the deblocking filter 256, the DPB 259, the screen intra prediction unit 260 and the motion compensation unit 262 respectively perform processes similar to those of the inverse quantization unit 128, the inverse orthogonal transformation unit 129, the addition unit 130, the deblocking filter 131, the DPB 132, the screen intra prediction unit 133 and the motion prediction and compensation unit 134 of Fig. 3. Accordingly, the dependent image is decoded.

Specifically, the inverse quantization unit 253 subjects the quantized coefficient from the lossless decoding unit 252 to inverse quantization, and supplies the coefficient that is obtained as a result to the inverse orthogonal transformation unit 254.

The inverse orthogonal transformation unit 254 subjects the coefficient from the inverse quantization unit 253 to an inverse orthogonal transformation such as the inverse Discrete Cosine Transform or the inverse Karhunen-Loeve Transform, and supplies the residual information that is obtained as a result to the addition unit 255.

The addition unit 255 functions as the decoding unit and decodes the decoding-target dependent image by adding the residual information, which is the decoding-target dependent image that is supplied from the inverse orthogonal transformation unit 254, to the prediction image that is supplied from the switch 263. The addition unit 255 supplies the dependent image that is obtained as a result to the deblocking filter 256. Furthermore, when the prediction image is not supplied from the switch 263, the addition unit 255 supplies the dependent image, which is the residual information that is supplied from the inverse orthogonal transformation unit 254, to the deblocking filter 256.

The deblocking filter 256 removes block distortion by filtering the dependent image that is supplied from the addition unit 255. The deblocking filter 256 supplies the dependent image that is obtained as a result to the screen rearrangement buffer 257 and causes the screen rearrangement buffer 257 to accumulate the dependent image. In addition, the deblocking filter 256 supplies the post-block distortion removal dependent image to the DPB 259, causes the DPB 259 to accumulate the dependent image and also supplies the dependent image to the screen intra prediction unit 260.

The screen rearrangement buffer 257 stores the dependent image, which is supplied from the deblocking filter 256, in frame units. The screen rearrangement buffer 257 rearranges the dependent image of frame units in stored order for encoding into the original order of display, and supplies the dependent image to the D/A conversion unit 258.

The D/A conversion unit 258 subjects the dependent image of frame units that is supplied from the screen rearrangement buffer 257 to D/A conversion, and outputs the dependent image as the dependent image of a predetermined viewpoint.

The DPB (decoded picture buffer) 259 accumulates the dependent image that is supplied from the deblocking filter 256. In addition, the decoded image of the base image from the reception unit 231 of Fig. 16 is also supplied to and accumulated in the DPB 259. The dependent image and the decoded image of the base image that are accumulated in the DPB 259 are managed (controlled) by the RPS processing unit 264 and supplied to the motion compensation unit 262 as the reference images.

The screen intra prediction unit 260 performs screen intra prediction of the optimal intra prediction mode that the screen intra prediction information, which is supplied from the reception unit 231 of Fig. 16, indicates using the post-block distortion removal dependent image that is supplied from the deblocking filter 256, and generates the prediction image. Furthermore, the screen intra prediction unit 260 supplies the prediction image to the switch 263.

Of the motion vectors that are held, the motion vector generation unit 261 adds the motion vector and the motion vector residual, which are indicated by the prediction vector index included in the motion information that is supplied from the reception unit 231 of Fig. 16, to one another and restores the motion vector. The motion vector generation unit 261 holds the restored motion vector. In addition, the motion vector generation unit 261 supplies the restored motion vector, the optimal inter prediction mode that is included in the motion information and the like to the motion compensation unit 262.

The motion compensation unit 262 functions as a prediction image generation unit and performs the motion compensation process by reading out the reference image from the DPB 259 based on the motion vector and the optimal inter prediction mode that are supplied from the motion vector generation unit 261. The motion compensation unit 262 supplies the prediction image that is generated as a result to the switch 263.

When the prediction image is supplied from the screen intra prediction unit 260, the switch 263 supplies the prediction image to the addition unit 255, and when the prediction image is supplied from the motion compensation unit 262, the switch 263 supplies the prediction image to the addition unit 255.

The RPS processing unit 264 acquires the RPS information of the dependent image and the RPS information of the base image that are supplied from the reception unit 231 of Fig. 16. In addition, the RPS processing unit 264 controls the dependent image and the decoded image of the base image that are accumulated in the DPB 259 as the reference images. Specifically, the RPS processing unit 264 determines the image to supply to the motion compensation unit 262 as the reference image from the dependent image and the decoded image of the base image that are accumulated in the DPB 259 and causes the selected image to be supplied to the motion compensation unit 262. In addition, the RPS processing unit 264 determines unnecessary pictures from the pictures (the dependent image and the decoded image of the base image) that are accumulated in the DPB 132 and removes the unnecessary pictures.

Description of Demultiplexing Process

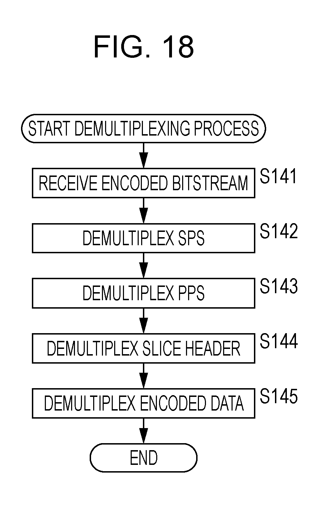

Fig. 18 is a flowchart that illustrates a demultiplexing process according to the reception unit 231 of Fig. 16.

In the demultiplexing process, first, in step S141, the reception unit 231 receives the encoded bitstream of the dependent image that is encoded by the non-base encoding unit 12 and delivered.

In step S142, the reception unit 231 demultiplexes the SPS from the encoded bitstream of the received dependent image and supplies the SPS to the decoding unit 232.

In step S143, the reception unit 231 demultiplexes the PPS from the encoded bitstream and supplies the PPS to the decoding unit 232. The RPS information of the dependent image included in the PPS is supplied to the RPS processing unit 264 of the decoding unit 232.

In step S144, the reception unit 231 demultiplexes the slice header from the encoded bitstream and supplies the slice header to the decoding unit 232. The RPS information of the dependent image included in the slice header is supplied to the RPS processing unit 264 of the decoding unit 232.

In step S145, the reception unit 231 demultiplexes the encoded data from the encoded bitstream and supplies the encoded data to the decoding unit 232.

Description of Decoding Process

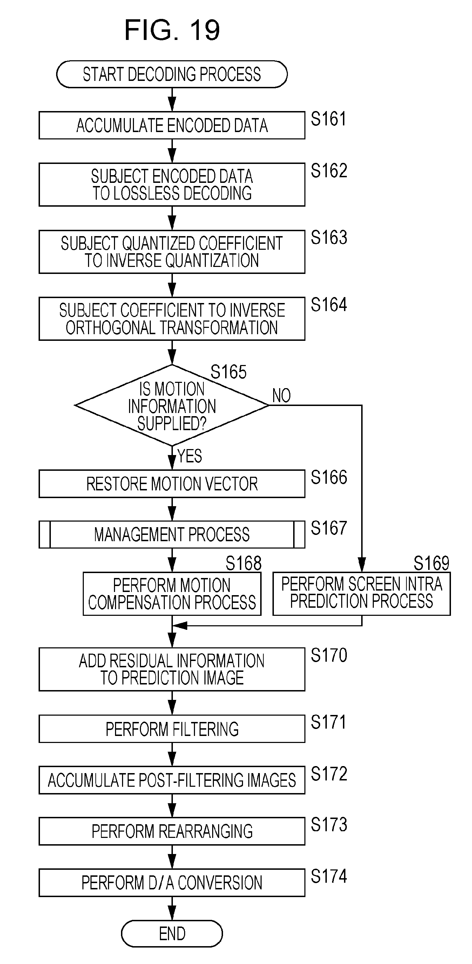

Fig. 19 is a flowchart that illustrates the decoding process of the decoding unit 232 of Fig. 17. The decoding process is performed for each viewpoint.

In step S161 of Fig. 19, the accumulation buffer 251 of the decoding unit 232 receives and accumulates the encoded data of slice units of the dependent image from the reception unit 231 of Fig. 16. The accumulation buffer 251 supplies the encoded data that is accumulated to the lossless decoding unit 252.

In step S162, the lossless decoding unit 252 subjects the encoded data that is supplied from the accumulation buffer 251 to lossless decoding, and supplies the quantized coefficient that is obtained as a result to the inverse quantization unit 253.

In step S163, the inverse quantization unit 253 subjects the quantized coefficient from the lossless decoding unit 252 to inverse quantization, and supplies the coefficient that is obtained as a result to the inverse orthogonal transformation unit 254.

In step S164, the inverse orthogonal transformation unit 254 subjects the coefficient from the inverse quantization unit 253 to inverse orthogonal transformation, and supplies the residual information that is obtained as a result to the addition unit 255.

In step S165, the motion vector generation unit 261 determines whether or not the motion information is supplied from the reception unit 231 of Fig. 16. When the motion information is determined to be supplied in step S165, the process proceeds to step S166.

In step S166, the motion vector generation unit 261 restores and holds the motion vector based on the motion information and the motion vector that is held. The motion vector generation unit 261 supplies the restored motion vector, the optimal inter prediction mode that is included in the motion information and the like to the motion compensation unit 262.

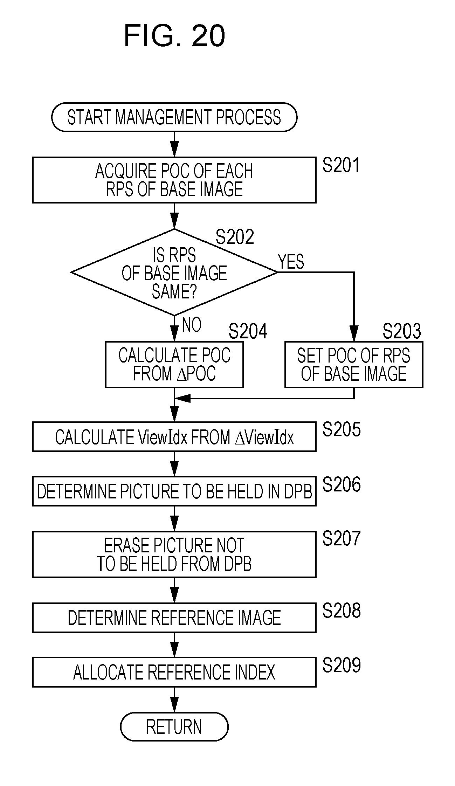

In step S167, the RPS processing unit 264 executes a management process for managing the pictures (the dependent image and the decoded image of the base image) that are accumulated in the DPB 259. The management process will be described in detail hereinafter with reference to Fig. 20. The picture that is supplied to the motion compensation unit 262 as the reference image from the pictures that are accumulated in the DPB 259 is determined based on the acquired RPS information.

In step S168, the motion compensation unit 262 performs the motion compensation process by reading out the reference image from the DPB 259 based on the motion vector and the optimal inter prediction mode that are supplied from the motion vector generation unit 261. The motion compensation unit 262 supplies the prediction image that is generated as a result of the motion compensation process to the switch 263. When the output of the motion compensation unit 262 is selected in the switch 263, the prediction image from the motion compensation unit 262 is supplied to the addition unit 255.

On the other hand, when it is determined that the motion information is not supplied in step S165, that is, when the screen intra prediction information is supplied from the reception unit 231 to the screen intra prediction unit 260, the process proceeds to step S169.

In step S169, the screen intra prediction unit 260 performs the screen intra prediction process of the optimal intra prediction mode that is indicated by the screen intra prediction information, which is supplied from the reception unit 231, using the reference image that is supplied from the addition unit 255. The screen intra prediction unit 260 supplies the prediction image that is generated as a result to the switch 263. When the output of the screen intra prediction unit 260 is selected in the switch 263, the prediction image from the screen intra prediction unit 260 is supplied to the addition unit 255.

In step S170, the addition unit 255 adds the residual information that is supplied from the inverse orthogonal transformation unit 254 to the prediction image that is supplied from the switch 263. The addition unit 255 supplies the dependent image that is obtained as a result to the deblocking filter 256.

In step S171, the deblocking filter 256 removes block distortion by performing filtering on the dependent image that is supplied from the addition unit 255.

In step S172, the deblocking filter 256 supplies the post-filtering dependent image to the screen rearrangement buffer 257 and the DPB 259, causes the dependent image to be accumulated and supplies the dependent image to the screen intra prediction unit 260.

In step S173, the screen rearrangement buffer 257 stores the dependent image that is supplied from the deblocking filter 256 in frame units, rearranges the dependent image of frame units in stored order for encoding into the original order of display, and supplies the dependent image to the D/A conversion unit 258.

In step S174, the D/A conversion unit 258 subjects the dependent image of frame units that is supplied from the screen rearrangement buffer 257 to D/A conversion, and outputs the dependent image as the dependent image of a predetermined viewpoint.

Description of Management Process

Fig. 20 is a flowchart that illustrates the management process of step S167 of Fig. 19.

In step S201, the RPS processing unit 264 acquires the POC of each RPS of the base image.

In step S202, the RPS processing unit 264 determines whether or not the POC of the dependent image is the same as the RPS of the base image by referencing ref_pic_set_temporal_same_flag of the RPS of the dependent image.

In step S202, when the POC of the dependent image is determined to be the same as the POC of the RPS of the base image, the process proceeds to step S203, and the RPS processing unit 264 sets the POC of the RPS of the base image that is the same to the POC of the dependent image.

In step S202, when the POC of the dependent image is determined not to be the same as the POC of the RPS of the base image, the process proceeds to step S204, and the RPS processing unit 264 calculates the POC of the dependent image from $\Delta$POC.

In step S205, the RPS processing unit 264 calculates ViewIdx from $\Delta$ViewIdx based on the RPS of the dependent image.

In step S206, the RPS processing unit 264 determines the picture (the base image and the decoded image of the dependent image) to be held in the DPB 259.

In step S207, the RPS processing unit 264 erases the picture that is not to be held (that is not necessary to be held) in the DPB 259 from the DPB 259.

In step S208, the RPS processing unit 264 determines the picture to be supplied as the reference image to the motion compensation unit 262 from the pictures that are accumulated in the DPB 259.

In step S209, the RPS processing unit 264 allocates the reference index, and returns to Fig. 19.

As described above, (the non-base decoding unit 212 of) the decoding device 201 decodes the encoded bitstream that is encoded by (the non-base encoding unit 12) of the encoding device 10. In other words, it is possible to decode the RPS information of the dependent image by receiving the encoded bitstream of the dependent image, in which the encoding efficiency is improved such that it is possible to reference the RPS information of the base image.

In addition, in the non-base decoding unit 212, the base image of a different view direction that is held in the DPB 259 is managed (controlled) using the ViewIdx in the same manner as the case of the POC. Therefore, it is also possible to realize the management of the DPB 259 in a plurality of views (viewpoints). In other words, it is possible to specify the picture of a different view direction that is present in the DPB 259, and, it is possible to distinguish the reference picture from the non-reference picture.

Other Examples

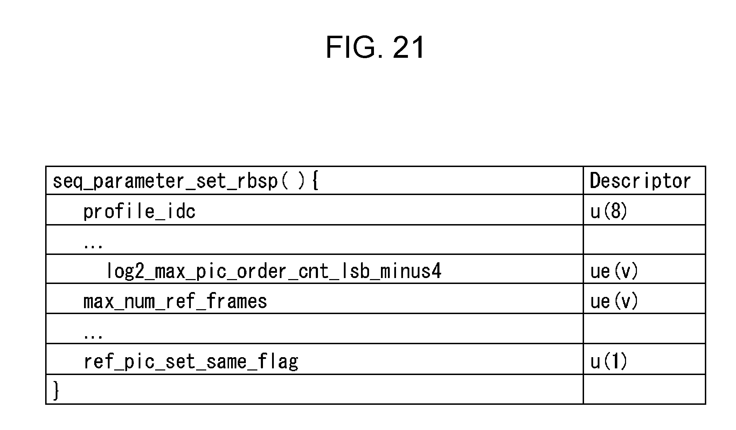

Fig. 21 shows another example of the syntax of the SPS (= seq_parameter_set_rbsp()) of the dependent image.

In Fig. 21, the lowest ref_pic_set_same_flag is newly added. ref_pic_set_same_flag is the information (the flag) that indicates that the RPS of the base image and the dependent image is the same. According to ref_pic_set_same_flag, when the RPS of the base image and the dependent image is the same, at the dependent image side, the same RPS as that of the base image is always referenced.

The present technology may also be applied to an encoding method other than the HEVC method described above, such as AVC (Advanced Video Coding) or MVC (Multiview Video Coding).

Second Embodiment

Description of Computer

The series of processes described above may be performed using hardware, and may be performed using software. When the series of processes is performed using software, the program that configures the software is installed on a general use computer or the like.

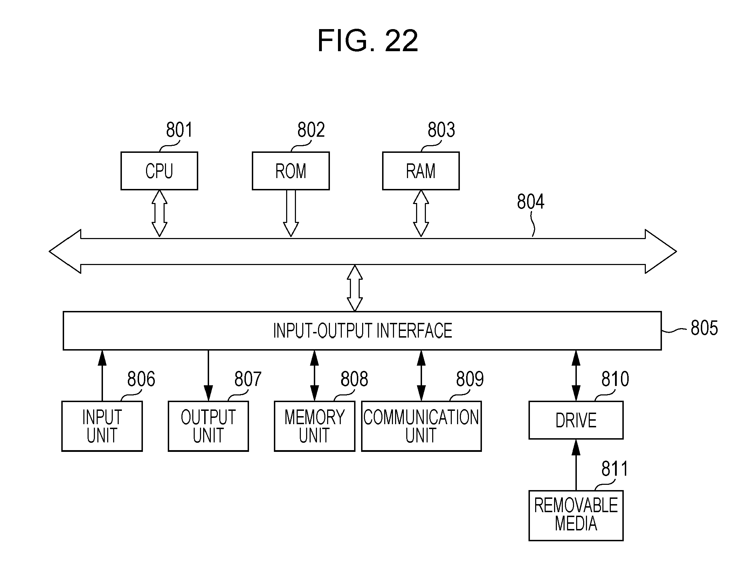

Therefore, Fig. 22 shows a configuration example of an embodiment of the computer on which the program, which executes the series of processes described above, is installed.

The program can be recorded in advance on a memory unit 808 or ROM (Read Only Memory) 802 that serves as a recording medium that is built into the computer.

Alternatively, the program can be stored (recorded) on removable media 811. The removable media 811 can be provided as so-called packaged software. Here, examples of the removable media 811 include, a flexible disk, a CD-ROM (Compact Disc Read Only Memory), an MO (Magneto Optical) disk, a DVD (Digital Versatile Disc), a magnetic disk, semiconductor memory and the like.

Furthermore, in addition to being installed on the computer via a drive 810 from the removable media 811 such as that described above, it is possible to download the program onto the computer via a communication network or a broadcast network and to install the program on the memory unit 808 that is built in. In other words, the program can be transferred to the computer in a wireless manner via an artificial satellite for digital satellite broadcasting from a download site, for example, and can be transferred to the computer in a wired manner via a network such as a LAN (Local Area Network) or the Internet.

A CPU (Central Processing Unit) 801 is built into the computer, and an input-output interface 805 is connected to the CPU 801 via a bus 804.

When a command is input by a user operating an input unit 806 or the like via the input-output interface 805, the CPU 801 executes the program that is stored in the ROM 802 according to the command. Alternatively, the CPU 801 loads the program that is stored in the memory unit 808 into the RAM (Random Access Memory) 803 and executes the program.

Accordingly, the CPU 801 performs the processes according to the flowchart described above, or, performs the processes that are performed according to the configuration of the block diagrams described above. Furthermore, as necessary, the CPU 801 outputs the results of the processes from an output unit 807 via the input-output interface 805, for example, or, transmits the results from the communication unit 809 and further causes the memory unit 808 to record the results or the like.

Furthermore, the input unit 806 is configured of a keyboard, a mouse, a microphone or the like. In addition, the output unit 807 is configured of an LCD (Liquid Crystal Display), a speaker or the like.

Here, in the present specification, the processes that the computer performs according to the program need not necessarily be performed in time series order in the order denoted by the flowcharts. In other words, the processes that the computer performs according to the program include processes that are executed in parallel, or, individually (for example, parallel processing or object-based processing).

In addition, the program may be processed by one computer (processor), and may also be processed in a distributed manner by a plurality of computers. Furthermore, the program may be transferred to a distant computer and executed.

The present technology can be applied to an encoding device and a decoding device that are used when performing communication via network media such as satellite broadcast, cable TV (television), the Internet, mobile telephones and the like, or, when processing on recording media such as optical or magnetic disks and flash memory.

In addition, the encoding device and the decoding device described above can be applied to arbitrary electronic devices. Description will be given of examples thereof hereinafter.

Third Embodiment

Configuration Example of Television Device

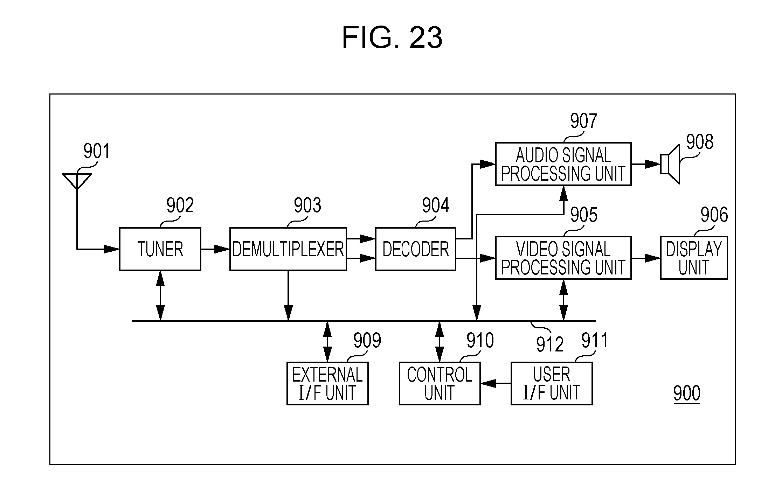

Fig. 23 shows an example of the schematic configuration of a television device to which the present technology is applied. A television device 900 includes an antenna 901, a tuner 902, a demultiplexer 903, a decoder 904, a video signal processing unit 905, a display unit 906, an audio signal processing unit 907, a speaker 908 and an external interface unit 909. Furthermore, the television device 900 includes a control unit 910, a user interface unit 911 and the like.

The tuner 902 selects a desired channel from a broadcast signal that is received by the antenna 901, performs demodulation, and outputs the encoded bitstream that is obtained to the demultiplexer 903.

The demultiplexer 903 extracts the video and the audio packets of the show, which is the viewing target, from the encoded bitstream, and outputs the packet data that is extracted to the decoder 904. In addition, the demultiplexer 903 supplies packets of data such as an EPG (Electronic Program Guide) to the control unit 910. Furthermore, when scrambling has been performed, removal of the scrambling is performed by the demultiplexer or the like.

The decoder 904 performs the decoding process of the packets, the video data that is generated by the decoding process is output to the video signal processing unit 905, and the audio data is output to the audio signal processing unit 907.

The video signal processing unit 905 performs noise removal, video processing and the like corresponding to user settings in relation to the video data. The video signal processing unit 905 generates the video data of a show to be displayed on the display unit 906, image data according to a process based on an application that is supplied via the network, and the like. In addition, the video signal processing unit 905 generates the video data for displaying a menu screen or the like such as the item selection, and superimposes the video data onto the video data of the show. The video signal processing unit 905 generates a drive signal based on the video data that is generated in this manner, and drives the display unit 906.

The display unit 906 drives display devices (for example, liquid crystal display devices or the like) based on the drive signal from the video signal processing unit 905, and causes the display devices to display the video of the show and the like.

The audio signal processing unit 907 subjects the audio data to a predetermined process such as noise removal, and performs audio output by subjecting the post-processing audio data to a D/A conversion process and an amplification process and supplying the result to the speaker 908.

The external interface unit 909 is an interface for connecting to external devices or to a network, and performs data transmission and reception of the video data, the audio data and the like.

The user interface unit 911 is connected to the control unit 910. The user interface unit 911 is configured of an operation switch, a remote control signal reception unit and the like, and supplies an operation signal corresponding to a user operation to the control unit 910.

The control unit 910 is configured using a CPU (Central Processing Unit), memory and the like. The memory stores the program that is executed by the CPU, the various data that is necessary for the CPU to perform the processes, the EPG data, data that is acquired via the network and the like. The program that is stored in the memory is read out and executed by the CPU at a predetermined timing such as when the television device 900 starts up. By executing the program, the CPU controls each part such that the television device 900 performs an operation that corresponds to the user operation.

Furthermore, the television device 900 is provided with the tuner 902, the demultiplexer 903, the video signal processing unit 905, the audio signal processing unit 907, an external interface unit 909 and the like and a bus 912 for connecting the control unit 910.

In a television device that is configured in this manner, the decoder 904 is provided with the function of the decoding device (the decoding method) of the present application. Therefore, it is also possible to realize the management of the DPB in relation to the base image of a different view direction, and, by reducing the code amount by referencing the RPS of the base image, it is possible to decode the encoded bitstream of the dependent image in which the encoding efficiency is improved.

Fourth Embodiment

Configuration Example of Mobile Telephone

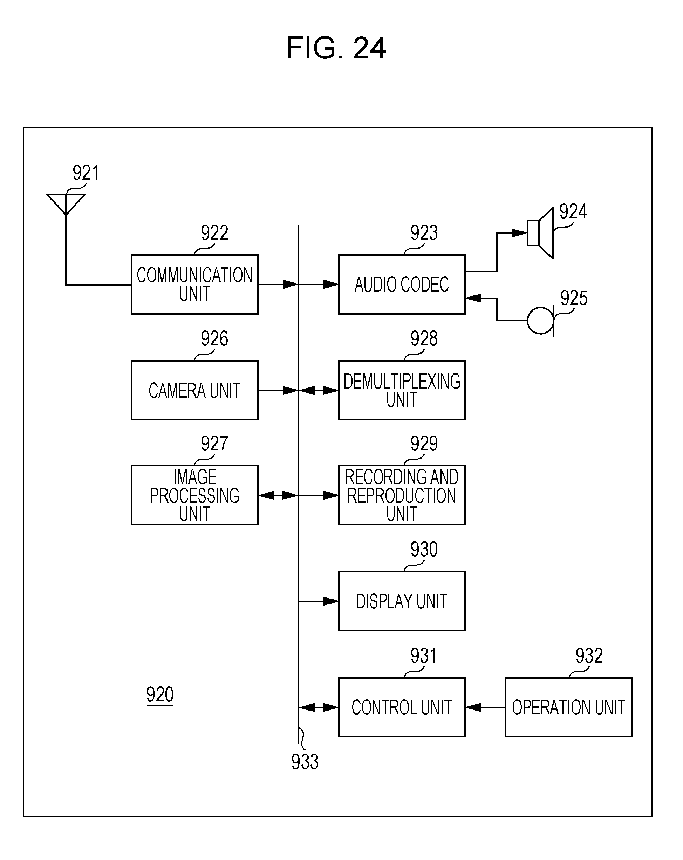

Fig. 24 shows an example of a schematic configuration of a mobile telephone to which the present technology is applied. A mobile telephone 920 includes a communication unit 922, an audio codec 923, a camera unit 926, an image processing unit 927, a demultiplexing unit 928, a recording and reproduction unit 929, a display unit 930 and a control unit 931. These are connected to one another via a bus 933.

In addition, an antenna 921 is connected to the communication unit 922, and a speaker 924 and a microphone 925 are connected to the audio codec 923. Furthermore, an operation unit 932 is connected to the control unit 931.

The mobile telephone 920 performs various operations such as transmission and reception of audio signals, transmission and reception of electronic mail and image data, image photography and data recording in various modes such as an audio call mode and a data communication mode.

In the audio call mode, the audio signal, which is generated by the microphone 925, is converted into audio data and data compression is performed thereon by the audio codec 923, and the result is supplied to the communication unit 922. The communication unit 922 performs a modulation process, a frequency conversion process or the like of the audio data and generates the transmission signal. In addition, the communication unit 922 supplies the transmission signal to the antenna 921 and transmits the transmission signal to a base station (not shown). In addition, the communication unit 922 performs the amplification, the frequency conversion process, the demodulation process and the like of the received signal that is received by the antenna 921, and supplies the obtained audio data to the audio codec 923. The audio codec 923 subjects the audio data to data expansion and conversion to an analogue audio signal, and outputs the result to the speaker 924.

In addition, in the data communication mode, when performing mail transmission, the control unit 931 receives the character data that is input by the operation of the operation unit 932, and displays the characters that are input on the display unit 930. In addition, the control unit 931 generates the mail data based on the user commands and the like in the operation unit 932, and supplies the mail data to the communication unit 922. The communication unit 922 performs the modulation process, the frequency conversion process and the like of the mail data, and transmits the transmission signal that is obtained from the antenna 921. In addition, the communication unit 922 performs the amplification, the frequency conversion process, the demodulation process and the like of the received signal that is received by the antenna 921, and restores the mail data. The mail data is supplied to the display unit 930, and the display of the mail content is performed.

Furthermore, the mobile telephone 920 can also cause the recording and reproduction unit 929 to store the mail data that is received on a storage medium. The storage medium is an arbitrary re-writable storage medium. Examples of the storage medium include semiconductor memory such as RAM and built-in flash memory, a hard disk, removable media such as a magnetic disk, a magneto optical disk, an optical disk, USB memory or a memory card.

When transmitting image data in the data communication mode, the image data that is generated by the camera unit 926 is supplied to the image processing unit 927. The image processing unit 927 performs the encoding processes of the image data and generates the encoded data.

The demultiplexing unit 928 multiplexes the encoded data that is generated by the image processing unit 927 and the audio data that is supplied from the audio codec 923 using a predetermined method and supplies the multiplexed data to the communication unit 922. The communication unit 922 performs the modulation process, the frequency conversion process and the like of the multiplexed data, and transmits the transmission signal that is obtained from the antenna 921. In addition, the communication unit 922 performs the amplification, the frequency conversion process, the demodulation process and the like of the received signal that is received by the antenna 921, and restores the multiplexed data. The multiplexed data is supplied to the demultiplexing unit 928. The demultiplexing unit 928 performs the demultiplexing of the multiplexed data, and supplies the encoded data to the image processing unit 927 and the audio data to the audio codec 923. The image processing unit 927 performs the decoding processes of the encoded data and generates the image data. The image data is supplied to the display unit 930, and the display of the image that is received is performed. The audio codec 923 outputs the audio that is received by converting the audio data into an analogue audio signal, and supplying the analogue audio signal to the speaker 924.

In a mobile telephone device that is configured in this manner, the image processing unit 927 is provided with the functions of the encoding device and the decoding device (the encoding method and the decoding method) of the present application. Therefore, it is also possible to realize the management of the DPB in relation to the base image of a different view direction, and, by reducing the code amount by referencing the RPS of the base image, it is possible to generate the encoded bitstream of the dependent image in which the encoding efficiency is improved. In addition, it is also possible to realize the management of the DPB in relation to the base image of a different view direction, and, by reducing the code amount by referencing the RPS of the base image, it is possible to decode the encoded bitstream of the dependent image in which the encoding efficiency is improved.

Fifth Embodiment

Configuration Example of Recording and Reproduction Device

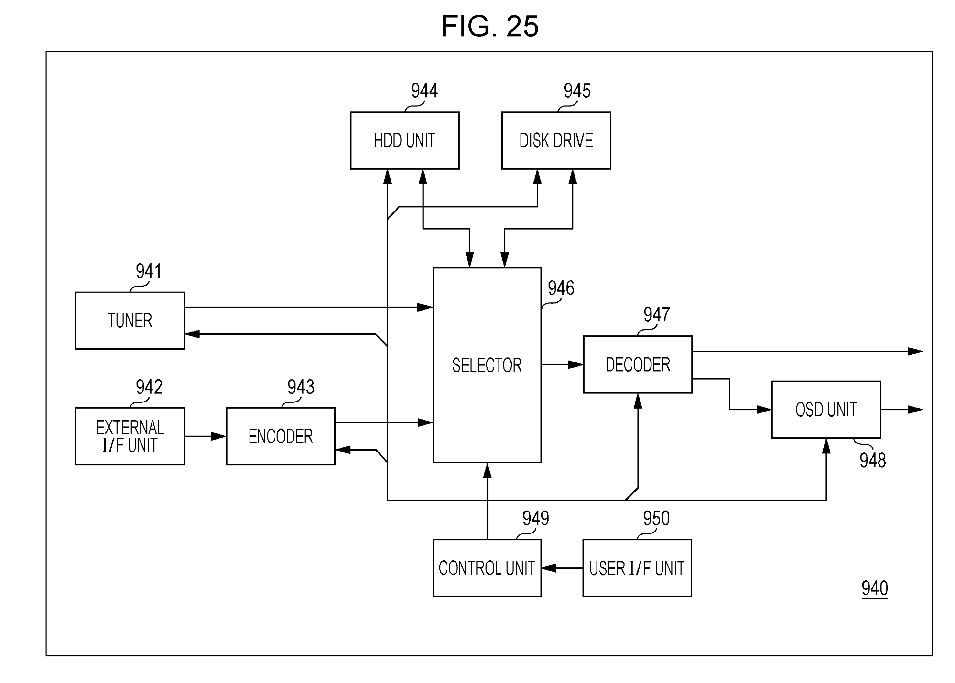

Fig. 25 shows an example of the schematic configuration of the recording and reproduction device to which the present technology is applied. A recording and reproduction device 940 records audio data and video data of a broadcast show that is received, for example, on a recording medium, and provides a user with the data that is recorded at a timing that corresponds to a command of the user. In addition, it is possible to cause the recording and reproduction device 940 to acquire the audio data and the video data from another device, for example, and to record the data onto the recording medium. Furthermore, the recording and reproduction device 940 can perform image display and audio output on a monitor device or the like by decoding and outputting the audio data and the video data that are recorded on the recording medium.

The recording and reproduction device 940 includes a tuner 941, an external interface unit 942, an encoder 943, an HDD (Hard Disk Drive) unit 944, a disk drive 945, a selector 946, a decoder 947, an OSD (On-Screen Display) unit 948, a control unit 949 and a user interface unit 950.

The tuner 941 selects a desired channel from a broadcast signal that is received by the antenna (not shown). The tuner 941 outputs an encoded bitstream, which is obtained by demodulating the received signal of the desired channel, to the selector 946.

The external interface unit 942 is configured of at least one of an IEEE 1394 interface, a network interface unit, a USB interface, a flash memory interface or the like. The external interface unit 942 is an interface for connecting to external devices, a network, a memory card or the like, and performs data reception of the video data, the audio data and the like that are recorded.

The encoder 943 performs encoding using a predetermined method when the video data and the audio data that are supplied from the external interface unit 942 are not encoded, and outputs the encoded bitstream to the selector 946.

The HDD unit 944 records content data such as video and audio, various programs, other data and the like on a built-in hard disk, and, during reproduction and the like, reads out the recorded content from the hard disk.

The disk drive 945 performs recording and reproduction of a signal in relation to an optical disk that is mounted therein. The optical disk, for example, a DVD disk (DVD-Video, DVD-RAM, DVD-R, DVD-RW, DVD+R, DVD+RW and the like), a Blu-ray disk or the like.

During recording of the video and the audio, the selector 946 selects the encoded bitstream from one of the tuner 941 and the encoder 943, and supplies the encoded bitstream to one of the HDD unit 944 and the disk drive 945. In addition, during reproduction of the video and the audio, the selector 946 supplies the encoded bitstream, which is output from the HDD unit 944 or the disk drive 945, to the decoder 947.

The decoder 947 performs a decoding process of the encoded bitstream. The decoder 947 supplies the video data that is generated by performing the decoding process to the OSD unit 948. In addition, the decoder 947 outputs the audio data that is generated by performing the decoding process.

The OSD unit 948 generates the video data for displaying the menu screen and the like such as the item selection, superimposes the video data onto the video data that is output from the decoder 947 and outputs the result.

The user interface unit 950 is connected to the control unit 949. The user interface unit 950 is configured of an operation switch, a remote control signal reception unit and the like, and supplies an operation signal corresponding to a user operation to the control unit 949.

The control unit 949 is configured using a CPU, memory and the like. The memory stores the program that is executed by the CPU and the various data that is necessary for the CPU to perform the processes. The program that is stored in the memory is read out and executed by the CPU at a predetermined timing such as when the recording and reproduction device 940 starts up. By executing the program, the CPU controls each part such that the recording and reproduction device 940 performs an operation that corresponds to the user operation.

In a recording and reproduction device that is configured in this manner, the decoder 947 is provided with the function of the decoding device (the decoding method) of the present application. Therefore, it is also possible to realize the management of the DPB in relation to the base image of a different view direction, and, by reducing the code amount by referencing the RPS of the base image, it is possible to decode the encoded bitstream of the dependent image in which the encoding efficiency is improved.

Sixth Embodiment

Configuration Example of Imaging Device

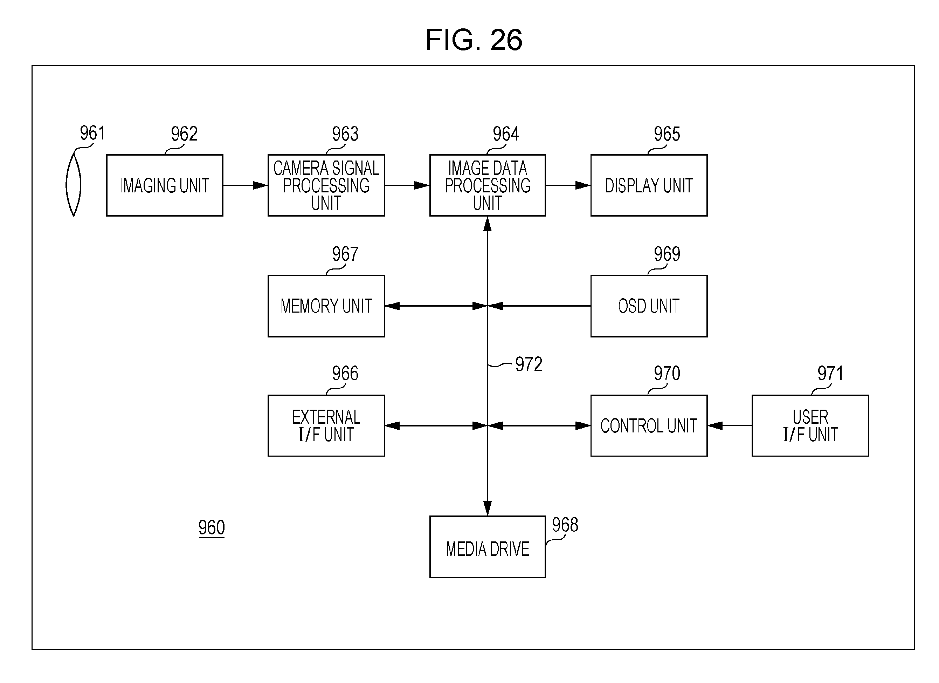

Fig. 26 shows an example of the schematic configuration of an imaging device to which the present technology is applied. An imaging device 960 images an object, causes the display unit to display an image of the object, and records the image on a recording medium as image data.

The imaging device 960 includes an optical block 961, an imaging unit 962, a camera signal processing unit 963, an image data processing unit 964, a display unit 965, an external interface unit 966, a memory unit 967, a media drive 968, an OSD unit 969 and a control unit 970. In addition, a user interface unit 971 is connected to the control unit 970. Furthermore, the image data processing unit 964, the external interface unit 966, the memory unit 967, the media drive 968, the OSD unit 969, the control unit 970 and the like are connected to one another via a bus 972.

The optical block 961 is configured using a focus lens, an aperture mechanism or the like. The optical block 961 causes an optical image of the object to form on an imaging surface of the imaging unit 962. The imaging unit 962 is configured using a CCD or a CMOS image sensor, generates an electrical signal corresponding to the optical image using photoelectric conversion, and supplies the electrical signal to the camera signal processing unit 963.

The camera signal processing unit 963 performs various camera signal processes such as knee correction, gamma correction and color correction in relation to the electrical signal that is supplied from the imaging unit 962. The camera signal processing unit 963 supplies the post-camera signal processing image data to the image data processing unit 964.

The image data processing unit 964 performs the encoding process of the image data that is supplied from the camera signal processing unit 963. The image data processing unit 964 supplies the encoded data that is generated by performing the encoding process to the external interface unit 966 or the media drive 968. In addition, the image data processing unit 964 performs the decoding process of the encoded data that is supplied from the external interface unit 966 or the media drive 968. The image data processing unit 964 supplies the image data that is generated by performing the decoding process to the display unit 965. In addition, the image data processing unit 964 superimposes the display data, which is acquired from a process of supplying the image data that is supplied from the camera signal processing unit 963 to the display unit 965, or from the OSD unit 969, onto the image data. The image data processing unit 964 supplies the result thereof to the display unit 965.

The OSD unit 969 generates the display data such as menu screens and icons that are formed of symbols, characters or graphics, and outputs the display data to the image data processing unit 964.

The external interface unit 966 is configured of a USB input-output terminal or the like, for example, and when performing printing of the image, is connected to a printer. In addition, a drive is connected to the external interface unit 966 as necessary, removable media such as a magnetic disk or an optical disk is appropriately mounted therein, and a computer program that is read out therefrom is installed, as necessary. Furthermore, the external interface unit 966 includes a network interface that is connected to a predetermined network such as a LAN or the Internet. The control unit 970, for example, reads out the encoded data from the memory unit 967 according to the commands from the user interface unit 971, and can supply the encoded data from the external interface unit 966 to another device that is connected via the network. In addition, the control unit 970 acquires the encoded data and the image data that are supplied from another device via the network via the external interface unit 966, and can supply the encoded data and the image data to the image data processing unit 964.

Usable examples of the recording media that is driven by the media drive 968 include a magnetic disk, a magneto optical disk, an optical disk, or arbitrary removable media that can be read from and written to such as semiconductor memory. In addition, the type of removable media of the recording media is also arbitrary, and may be a tape device, a disk or a memory card. Naturally, the type may be a contactless IC card or the like.

In addition, the media drive 968 and the recording media may be integrated, for example, and be configured of a non-transportable recording medium such as a built-in hard disk drive or an SSD (Solid State Drive).

The control unit 970 is configured using a CPU, memory and the like. The memory stores the program that is executed by the CPU and the various data that is necessary for the CPU to perform the processes. The program that is stored in the memory is read out and executed by the CPU at a predetermined timing such as when the imaging device 960 starts up. By executing the program, the CPU controls each part such that the imaging device 960 performs an operation that corresponds to the user operation.

In an imaging device that is configured in this manner, the image data processing unit 964 is provided with the functions of the encoding device and the decoding device (the encoding method and the decoding method) of the present application. Therefore, it is also possible to realize the management of the DPB in relation to the base image of a different view direction, and, by reducing the code amount by referencing the RPS of the base image, it is possible to generate the encoded bitstream of the dependent image in which the encoding efficiency is improved. In addition, it is also possible to realize the management of the DPB in relation to the base image of a different view direction, and, by reducing the code amount by referencing the RPS of the base image, it is possible to decode the encoded bitstream of the dependent image in which the encoding efficiency is improved.

The embodiments of the present technology are not limited to the embodiments described above, and various modifications may be made within the scope not departing from the gist of the present technology.

Furthermore, the present technology may adopt the following configurations.

(1) An image processing device that includes a setting unit of setting view direction management information for managing a base image of a base view, which is stored in a decoded picture buffer when encoding a dependent image of a dependent view; an encoding unit that generates encoded data by encoding the base image and the dependent image; and a delivery unit that delivers the view direction management information that is set by the setting unit and the encoded data that is generated by the encoding unit.

(2) The image processing device according to (1), in which the setting unit sets same information that indicates that time direction management information for managing an image of a time direction to be stored in the decoded picture buffer when encoding the dependent image is a same as the time direction management information of the base image, and in which the delivery unit delivers the same information that is set by the setting unit.

(3) The image processing device according to (1) or (2), in which the setting unit sets the view direction management information as an RPS.

(4) An image processing method, in which an image processing device includes a setting step of setting view direction management information for managing a base image of a base view, which is stored in a decoded picture buffer when encoding a dependent image of a dependent view; an encoding step of generating encoded data by encoding the base image and the dependent image; and a delivery step of delivering the view direction management information that is set in the setting step and the encoded data that is generated in the encoding step.

(5) An image processing device includes a reception unit that receives view direction management information for managing a base image of a base view, which is stored in a decoded picture buffer when decoding a dependent image of a dependent view, and encoded data in which the base image and the dependent image are encoded; and a decoding unit that decodes the encoded data that is encoded and manages the base image of the decoded picture buffer based on the view direction management information.

(6) The image processing device according to (5) in which the reception unit receives same information that indicates that time direction management information for managing an image of a time direction to be stored in the decoded picture buffer when decoding the dependent image is a same as the time direction management information of the base image, and the time direction management information of the base image, and in which the decoding unit manages an image of the time direction to be stored in the decoded picture buffer using the time direction management information of the base image.

(7) The image processing device according to (5) or (6) in which the reception unit receives the view direction management information as an RPS.

(8) An image processing method, in which an image processing device includes a reception step of receiving view direction management information for managing a base image of a base view, which is stored in a decoded picture buffer when decoding a dependent image of a dependent view, and encoded data in which the base image and the dependent image are encoded; and a decoding step of decoding the encoded data that is encoded and managing the base image of the decoded picture buffer based on the view direction management information.

Reference Signs List

10 ENCODING DEVICE, 12 NON-BASE ENCODING UNIT, 31 ENCODING UNIT, 32 SETTING UNIT, 132 DPB (DECODED PICTURE BUFFER), 136 RPS GENERATION UNIT, 201 DECODING DEVICE, 212 NON-BASE DECODING UNIT, 231 RECEPTION UNIT, 232 DECODING UNIT, 259 DPB (DECODED PICTURE BUFFER), 264 RPS PROCESSING UNIT

**Claims**

1. An image processing device, comprising:

   a setting unit that sets view direction management information for managing a base image of a base view, which is stored in a decoded picture buffer when encoding a dependent image of a dependent view;
   an encoding unit that generates encoded data by encoding the base image and the dependent image; and
   a delivery unit that delivers the view direction management information that is set by the setting unit and the encoded data that is generated by the encoding unit.

2. The image processing device according to Claim 1,
   wherein the setting unit sets same information that indicates that time direction management information for managing an image of a time direction to be stored in the decoded picture buffer when encoding the dependent image is a same as the time direction management information of the base image, and
   wherein the delivery unit delivers the same information that is set by the setting unit.

3. The image processing device according to Claim 1,
   wherein the setting unit sets the view direction management information as an RPS.

4. An image processing method,
   wherein an image processing device comprises:

   a setting step of setting view direction management information for managing a base image of a base view, which is stored in a decoded picture buffer when encoding a dependent image of a dependent view;
   an encoding step of generating encoded data by encoding the base image and the dependent image; and
   a delivery step of delivering the view direction management information that is set in the setting step and the encoded data that is generated in the encoding step.

5. An image processing device, comprising:

   a reception unit that receives view direction management information for managing a base image of a base view, which is stored in a decoded picture buffer when decoding a dependent image of a dependent view, and encoded data in which the base image and the dependent image are encoded; and
   a decoding unit that decodes the encoded data that is encoded and manages the base image of the decoded picture buffer based on the view direction management information.

6. The image processing device according to Claim 5,
   wherein the reception unit receives same information that indicates that time direction management information for managing an image of a time direction to be stored in the decoded picture buffer when decoding the dependent image is a same as the time direction management information of the base image, and the time direction management information of the base image, and
   wherein the decoding unit manages an image of the time direction to be stored in the decoded picture buffer using the time direction management information of the base image.

7. The image processing device according to Claim 5,
   wherein the reception unit receives the view direction management information as an RPS.

8. An image processing method,
   wherein an image processing device comprises:

   a reception step of receiving view direction management information for managing a base image of a base view, which is stored in a decoded picture buffer when decoding a dependent image of a dependent view, and encoded data in which the base image and the dependent image are encoded; and
   a decoding step of decoding the encoded data that is encoded and managing the base image of the decoded picture buffer based on the view direction management information.

# FIG. 1

# FIG. 2

## FIG. 3

EP 2 811 744 A1

EP 2 811 744 A1

## FIG. 4

| seq_parameter_set_rbsp( ){ | Descriptor |
|---|---|
|   profile_idc | u(8) |
|   ... | |
|     log2_max_pic_order_cnt_lsb_minus4 | ue(v) |
|   max_num_ref_frames | ue(v) |
|   ... | |
| } | |

# FIG. 5

| slice_header ( ) { | Descriptor |
|---|---|
| lightweight_slice_flag | u(1) |
| if(!lightweight_slice_flag) { | |
| slice_type | ue(v) |
| pic_parameter_set_id | ue(v) |
| if(IdrPicFlag) { | |
| idr_pic_id | ue(v) |
| no_output_of_prior_pics_flag | u(1) |
| } | |
| else{ | |
| pic_order_cnt_lsb | u(v) |
| ref_pic_set_multiview_pps_flag | u(1) |
| if(!ref_pic_set_multiview_pps_flag) | |
| multiview_ref_pic_set(multiview_num_ref_pic_sets) | |
| else | |
| multiview_ref_pic_set_idx | u(v) |
| if(slice_type == P\|\|slice_type == B) { | |
| num_ref_idx_active_override_flag | u(1) |
| if(num_ref_idx_active_override_flag) { | |
| num_ref_idx_l0_active_minus1 | ue(v) |
| if(slice_type == B) { | |
| num_ref_idx_l1_active_minus1 | ue(v) |
| } | |
| } | |
| ref_pic_list_modification() | |
| ref_pic_list_combination() | |
| } | |
| ... | |
| } | |

# FIG. 6

| pic_parameter_set_rbsp( ) { | Descriptor |
|---|---|
| pic_parameter_set_id | ue(v) |
| seq_parameter_set_id | ue(v) |
| entropy_coding_mode_flag | u(1) |
| multiview_num_ref_pic_sets | ue(v) |
| for(idx=0;idx<multiview_num_ref_pic_sets;idx++) | |
| multiview_ref_pic_set(idx) | |
| ... | |
| } | |

EP 2 811 744 A1

# FIG. 7

| multiview_ref_pic_set(idx) { | Descriptor |
|---|---|
| ref_pic_set_temporal_same_flag | u(1) |
| if(ref_pic_set_temporal_same_flag) { | |
| ref_pic_set_idx | |
| }else{ | |
| num_negative_pics | ue(v) |
| num_positive_pics | ue(v) |
| for(i=0;i<num_negative_pics;i++) { | |
| delta_poc_s0_minus1[i] | ue(v) |
| used_by_curr_pic_s0_flag[i] | u(1) |
| } | |
| for(i=0;i<num_positive_pics;i++) { | |
| delta_poc_s1_minus1[i] | ue(v) |
| used_by_curr_pic_s1_flag[i] | u(1) |
| } | |
| } | |
| num_negative_viewidx_pics | ue(v) |
| num_positive_viewidx_pics | ue(v) |
| for(i=0;i< num_negative_viewidx_pics;i++) { | |
| delta_viewidx_s0_minus1[i] | ue(v) |
| used_by_curr_pic_s0_flag[i] | u(1) |
| | |
| } | |
| for(i=0;i< num_positive_viewidx_pics;i++) { | |
| delta_viewidx_s1_minus1[i] | ue(v) |
| used_by_curr_pic_s1_flag[i] | u(1) |
| } | |
| } | |

# FIG. 8

EP 2 811 744 A1

# FIG. 9

```
cIdx=0
while(cIdx<=num_ref_idx_l0_active_minus1)
{
        for(i=0;i<NumRpsCurr0 && cIdx<=num_ref_idx_l0_active_minus1;cIdx++,i++)
            RefPicList0[cIdx]=RefPicSetCurr0[i]
        for(i=0;i<NumRpsCurr1 && cIdx<=num_ref_idx_l0_active_minus1;cIdx++,i++)
            RefPicList0[cIdx]=RefPicSetCurr1[i]
}

cIdx=0
while(cIdx<=num_ref_idx_l1_active_minus1)
{
        for(i=0;i<NumRpsCurr1 && cIdx<=num_ref_idx_l1_active_minus1;cIdx++,i++)
            RefPicList1[cIdx]=RefPicSetCurr1[i]
        for(i=0;i<NumRpsCurr0 && cIdx<=num_ref_idx_l1_active_minus1;cIdx++,i++)
            RefPicList1[cIdx]=RefPicSetCurr0[i]
}
```

EP 2 811 744 A1

## FIG. 10

START ENCODING PROCESS

PERFORM A/D CONVERSION — S11

PERFORM REARRANGING — S12

DETERMINE POC OF PICTURE WITHIN DPB — S13

ERASE PICTURE — S14

RPS INFORMATION ENCODING PROCESS — S15

DETERMINE REFERENCE IMAGE — S16

PERFORM SCREEN INTRA PREDICTION PROCESS — S17

PERFORM MOTION PREDICTION AND COMPENSATION PROCESS — S18

DETERMINE OPTIMAL INTER PREDICTION MODE — S19

DETERMINE OPTIMAL PREDICTION MODE BASED ON COST FUNCTION VALUE — S20

IS OPTIMAL PREDICTION MODE INTER PREDICTION MODE? — S21

NO

OUTPUT SCREEN INTRA PREDICTION INFORMATION — S23

YES

OUTPUT MOTION INFORMATION — S22

SUBTRACT PREDICTION IMAGE FROM IMAGE — S24

SUBJECT RESIDUAL INFORMATION TO ORTHOGONAL TRANSFORMATION — S25

SUBJECT COEFFICIENT TO QUANTIZATION — S26

SUBJECT QUANTIZED COEFFICIENT TO LOSSLESS ENCODING — S27

1

# FIG. 11

1

| ACCUMULATE ENCODED DATA | S28 |

| OUTPUT ENCODED DATA | S29 |

| SUBJECT QUANTIZED COEFFICIENT TO INVERSE QUANTIZATION | S30 |

| SUBJECT COEFFICIENT TO INVERSE ORTHOGONAL TRANSFORMATION | S31 |

| ADD RESIDUAL INFORMATION TO PREDICTION IMAGE | S32 |

| PERFORM FILTERING | S33 |

| ACCUMULATE POST-FILTERING IMAGE | S34 |

END

FIG. 12

START RPS INFORMATION ENCODING PROCESS

ACQUIRE RPS INFORMATION OF BASE IMAGE — S51

S52

IS POC OF
PICTURE WITHIN DPB SAME AS POC
INDICATED BY RPS INFORMATION OF
BASE IMAGE?

YES

NO

S53
RPS INFORMATION
GENERATION PROCESS

S54
ENCODE INDEX OF RPS
INFORMATION OF BASE IMAGE

S55
ENCODE TOTAL NUMBER OF PICTURES
IN WHICH ViewIdx IS SMALLER THAN
ViewIdx OF CURRENT PICTURE

S56
ENCODE TOTAL NUMBER OF PICTURES
IN WHICH ViewIdx IS GREATER THAN
ViewIdx OF CURRENT PICTURE

S57
SET PICTURE WITHIN DPB THAT IS NOT YET
PROCESSING TARGET TO TARGET PICTURE

S58
IS ViewIdx OF
CURRENT PICTURE GREATER
THAN ViewIdx OF PICTURE
WITHIN DPB?

NO

YES

S59
ENCODE ΔViewIdx

S61
ENCODE ΔViewIdx

S60
ENCODE REFERENCE
PRESENCE FLAG OF
TARGET PICTURE

S62
ENCODE REFERENCE
PRESENCE FLAG OF
TARGET PICTURE

S63
HAVE ALL
PICTURES WITHIN DPB
BEEN SET TO TARGET
PICTURE?

NO

YES

RETURN

# FIG. 13

START RPS INFORMATION GENERATION PROCESS

ENCODE TOTAL NUMBER OF PICTURES IN WHICH POC IS SMALLER THAN POC OF CURRENT PICTURE — S81

ENCODE TOTAL NUMBER OF PICTURES IN WHICH POC IS GREATER THAN POC OF CURRENT PICTURE — S82

SET PICTURE WITHIN DPB THAT IS NOT YET PROCESSING TARGET TO TARGET PICTURE — S83

S84
IS POC OF CURRENT PICTURE GREATER THAN POC OF TARGET PICTURE?

NO

YES

ENCODE ΔPOC — S85

ENCODE REFERENCE PRESENCE FLAG OF TARGET PICTURE — S86

ENCODE ΔPOC — S87

ENCODE REFERENCE PRESENCE FLAG OF TARGET PICTURE — S88

S89
HAVE ALL PICTURES WITHIN DPB BEEN SET TO TARGET PICTURE?

NO

YES

RETURN

# FIG. 14

```
    ( START SETTING PROCESS )
                │
                ▼
    ┌──────────────────────────┐  S101
    │         SET SPS          │
    └──────────────────────────┘
                │
                ▼
    ┌──────────────────────────┐  S102
    │         SET PPS          │
    └──────────────────────────┘
                │
                ▼
    ┌──────────────────────────┐  S103
    │      SET SLICE HEADER    │
    └──────────────────────────┘
                │
                ▼
    ┌──────────────────────────┐  S104
    │  OUTPUT ENCODED BITSTREAM │
    └──────────────────────────┘
                │
                ▼
            (   END   )
```

# FIG. 15

201

211

```
        ┌──────────────────┐
   ────►│      BASE         │────►
        │  DECODING UNIT    │
        └──────────────────┘
                │
                ▼
        ┌──────────────────┐
   ────►│    NON-BASE       │────►
        │  DECODING UNIT    │
        └──────────────────┘
```

212

# FIG. 16

212

231                    232

RECEPTION UNIT  →  DECODING UNIT  →

FIG. 17

251 ACCUMULATION BUFFER
252 LOSSLESS DECODING UNIT
253 INVERSE QUANTIZATION UNIT
254 INVERSE ORTHOGONAL TRANSFORMATION UNIT
255
256 DEBLOCKING FILTER
257 SCREEN REARRANGEMENT BUFFER
258 D/A CONVERSION UNIT
232
260 SCREEN INTRA PREDICTION UNIT
262 MOTION COMPENSATION UNIT
259 DPB
263
DECODED IMAGE OF BASE IMAGE
261 MOTION VECTOR GENERATION UNIT
264 RPS PROCESSING UNIT
RPS INFORMATION OF DEPENDENT IMAGE
RPS INFORMATION OF BASE IMAGE

EP 2 811 744 A1

# FIG. 18

```
        ( START DEMULTIPLEXING PROCESS )
                        |
                        v
        +------------------------------+
        | RECEIVE ENCODED BITSTREAM    | S141
        +------------------------------+
                        |
                        v
        +------------------------------+
        |       DEMULTIPLEX SPS        | S142
        +------------------------------+
                        |
                        v
        +------------------------------+
        |       DEMULTIPLEX PPS        | S143
        +------------------------------+
                        |
                        v
        +------------------------------+
        |   DEMULTIPLEX SLICE HEADER   | S144
        +------------------------------+
                        |
                        v
        +------------------------------+
        |   DEMULTIPLEX ENCODED DATA   | S145
        +------------------------------+
                        |
                        v
                    (   END   )
```

# FIG. 19

```
                START DECODING PROCESS

              ACCUMULATE ENCODED DATA          S161

              SUBJECT ENCODED DATA             S162
              TO LOSSLESS DECODING

           SUBJECT QUANTIZED COEFFICIENT       S163
              TO INVERSE QUANTIZATION

           SUBJECT COEFFICIENT TO INVERSE      S164
            ORTHOGONAL TRANSFORMATION

                                               S165
                    IS MOTION
                   INFORMATION       NO
                    SUPPLIED?

                       YES

              RESTORE MOTION VECTOR            S166

              MANAGEMENT PROCESS               S167

                              S168                        S169
              PERFORM MOTION            PERFORM SCREEN INTRA
           COMPENSATION PROCESS         PREDICTION PROCESS

            ADD RESIDUAL INFORMATION            S170
               TO PREDICTION IMAGE

                PERFORM FILTERING              S171

           ACCUMULATE POST-FILTERING IMAGES    S172

               PERFORM REARRANGING             S173

              PERFORM D/A CONVERSION           S174

                       END
```

# FIG. 20

START MANAGEMENT PROCESS

ACQUIRE POC OF EACH
RPS OF BASE IMAGE — S201

IS RPS
OF BASE IMAGE
SAME? — S202

YES

NO

CALCULATE POC
FROM ΔPOC — S204

SET POC OF RPS
OF BASE IMAGE — S203

CALCULATE ViewIdx FROM ΔViewIdx — S205

DETERMINE PICTURE TO BE HELD IN DPB — S206

ERASE PICTURE NOT
TO BE HELD FROM DPB — S207

DETERMINE REFERENCE IMAGE — S208

ALLOCATE REFERENCE INDEX — S209

RETURN

# FIG. 21

| seq_parameter_set_rbsp( ){ | Descriptor |
|---|---|
| profile_idc | u(8) |
| ... | |
| log2_max_pic_order_cnt_lsb_minus4 | ue(v) |
| max_num_ref_frames | ue(v) |
| ... | |
| ref_pic_set_same_flag | u(1) |
| } | |

# FIG. 22

EP 2 811 744 A1

FIG. 23

901 902 TUNER 903 DEMULTIPLEXER 904 DECODER 907 AUDIO SIGNAL PROCESSING UNIT 908 905 VIDEO SIGNAL PROCESSING UNIT 906 DISPLAY UNIT 909 EXTERNAL I/F UNIT 910 CONTROL UNIT 912 911 USER I/F UNIT 900

# FIG. 24

921

922
COMMUNICATION UNIT

923
AUDIO CODEC

924

925

926
CAMERA UNIT

928
DEMULTIPLEXING UNIT

927
IMAGE PROCESSING UNIT

929
RECORDING AND REPRODUCTION UNIT

930
DISPLAY UNIT

920

931
CONTROL UNIT

932
OPERATION UNIT

933

# FIG. 25

EP 2 811 744 A1

# FIG. 26

<div align="center">

**INTERNATIONAL SEARCH REPORT**

</div>

| | International application No. |
|---|---|
| | PCT/JP2013/051263 |

**A. CLASSIFICATION OF SUBJECT MATTER**
*H04N7/32*(2006.01)i, *H04N13/00*(2006.01)i

According to International Patent Classification (IPC) or to both national classification and IPC

**B. FIELDS SEARCHED**

Minimum documentation searched (classification system followed by classification symbols)
H04N7/12, 7/26, 7/30-7/32, H04N13/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 9-261653 A (Sharp Corp.),<br>03 October 1997 (03.10.1997),<br>paragraphs [0016] to [0024]<br>(Family: none) | 1,3-5,7,8<br>2,6 |
| X<br>A | JP 2000-23198 A (Nippon Hoso Kyokai),<br>21 January 2000 (21.01.2000),<br>paragraphs [0008], [0009], [0014], [0034] to<br>[0037]<br>(Family: none) | 1,3-5,7,8<br>2,6 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 April, 2013 (02.04.13) | 16 April, 2013 (16.04.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/051263 |

C (Continuation).    DOCUMENTS CONSIDERED TO BE RELEVANT

| Category* | Citation of document, with indication, where appropriate, of the relevant passages | Relevant to claim No. |
| --- | --- | --- |
| P,A | Yoshitomo Takahashi et al., High-level Syntax: Motion vector prediction issue for long-term referenece picture, Joint Collaborative Team on Video Coding (JCT-VC) of ITU-T SG 16 WP 3 and ISO/IEC JTC 1/SC 29/WG 11, 10th Meeting: Stockholm, SE, 11-20 July 2012, Document: JCTVC-J0071, 2012.07.11 | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **THOMAS WIEGAND ; WOO-JIN HAN ; BENJAMIN BROSS ; JENS-RAINER OHM ; GARY J. SULLIVIAN.** WD4: Working Draft 4 of High-Efficiency Video Coding. *JCTVC-F_803_d5, Torino, IT,* 14 July 2011

- JCT-VC AHG report: Reference picture buffering and list construction (AHG21). *JTC1/SC29/WG11, Geneva, CH,* 21 November 2011